# FASCICULE DE BREVET EUROPEEN

(11) **EP 3 155 166 B1**
(45) Date de publication et mention de la délivrance du brevet: **06.06.2018**
(21) Numéro de dépôt: 15727427.5
(22) Date de dépôt: 11.06.2015
(51) Int. Cl.: D07B 1/06, B60C 9/00, C08K 5/098, C08K 5/17, C08K 5/5317, D07B 1/16

(54) **PRODUIT SEMI-FINI COMPRENANT UN CÂBLE GOMMÉ IN SITU NOYÉ DANS UNE COMPOSITION DE CAOUTCHOUC DE CALANDRAGE**
HALBZEUG MIT EINEM IN SITU GUMMIERTEN KABEL IN EINER KALANDRIERKAUTSCHUKZUSAMMENSETZUNG
SEMI-FINISHED PRODUCT INCLUDING A CABLE GUMMED IN SITU AND ENCASED IN A CALENDERING RUBBER COMPOSITION

(30) Priorité: 12.06.2014 FR 1455369
(43) Date de publication de la demande: 19.04.2017
(73) Titulaire: Compagnie Générale des Etablissements Michelin, 63000 Clermont-Ferrand (FR)
(72) Inventeur: BELIN, Lionel, F-63040 Clermont-Ferrand Cedex 9 (FR); SALGUES, Nathalie, F-63040 Clermont-Ferrand Cedex 9 (FR); NOEL, Sébastien, F-63040 Clermont-Ferrand Cedex 9 (FR)
(74) Mandataire: Louret, Sylvain
(86) Numéro de dépôt international: PCT/EP2015/063016
(87) Numéro de publication internationale: WO 2015/189312

(56) Documents cités:
- EP-A1- 2 423 381
- WO-A1-2014/102138
- WO-A1-2014/108391
- JP-A- 2005 307 368

## Description

L'invention concerne un produit semi-fini comprenant un câble monotoron gommé in situ ou multi-torons gommé in situ noyé dans une composition de caoutchouc de calandrage, ainsi qu'un tel produit semi-fini cuit et un pneumatique comprenant un tel produit semi-fini.

Un pneumatique radial comporte de manière connue une bande de roulement, deux bourrelets inextensibles, deux flancs reliant les bourrelets à la bande de roulement et une ceinture, ou armature de sommet, disposée circonférentiellement entre l'armature de carcasse et la bande de roulement. L'armature de carcasse et/ou de sommet est constituée de manière connue d'au moins une nappe (ou "couche") de caoutchouc renforcée par des éléments de renforts tels que des câbles, généralement du type métalliques dans le cas de pneumatiques pour véhicules industriels porteurs de lourdes charges.

Pour le renforcement des armatures de carcasse et/ou de sommet, on utilise généralement des câbles métalliques monotoron constitués d'une couche centrale ou noyau et d'une ou plusieurs couches de fils concentriques disposées autour de ce noyau. Les câbles à trois couches les plus utilisés sont essentiellement des câbles de construction M+N+P, formés d'un noyau de M fil(s), M variant de 1 à 4, entourée d'une couche intermédiaire de N fils, N variant typiquement de 3 à 12, elle-même entourée d'une couche externe de P fils, P variant typiquement de 8 à 20, l'ensemble pouvant être éventuellement fretté par un fil de frette externe enroulé en hélice autour de la couche externe. On utilise également des câbles métalliques multitorons comprenant plusieurs torons tels que décrits ci-dessus.

De manière bien connue, ces câbles métalliques sont soumis, notamment dans le cas de l'armature de carcasse, à des contraintes importantes lors du roulage des pneumatiques, notamment à des flexions ou variations de courbure répétées induisant au niveau des fils des frottements, notamment par suite des contacts entre couches adjacentes, et donc de l'usure, ainsi que de la fatigue ; ils doivent donc présenter une haute résistance aux phénomènes dits de "fatigue-fretting".

Concernant l'armature de sommet, un pneumatique de véhicule industriel lourd, notamment de génie civil, est soumis à de nombreuses agressions. En effet, le roulage de ce type de pneumatique se fait habituellement sur un revêtement accidenté conduisant parfois à des perforations de la bande de roulement. Ces perforations permettent l'entrée d'agents corrosifs, par exemple l'air et l'eau, qui oxydent les éléments de renfort métalliques de l'armature de sommet, notamment des nappes de sommet, et réduisent considérablement la durée de vie du pneumatique.

Il est particulièrement important en outre que les éléments de renfort soient imprégnés autant que possible par le caoutchouc, que cette matière pénètre dans tous les espaces situés entre les fils et/ou les torons constituant les câbles. En effet, si cette pénétration est insuffisante, il se forme alors des canaux ou capillaires vides, le long et à l'intérieur des câbles, et les agents corrosifs tels que l'eau ou même l'oxygène de l'air, susceptibles de pénétrer dans les pneumatiques par exemple à la suite de coupures de leur bande de roulement, cheminent le long de ces canaux vides. La présence de cette humidité joue un rôle important en provoquant de la corrosion et en accélérant les processus de dégradation ci-dessus (phénomènes dits de "fatigue-corrosion" et d'agression du sommet), par rapport à une utilisation en atmosphère sèche.

Tous ces phénomènes de fatigue et d'agressions sont à l'origine d'une dégénérescence progressive des propriétés mécaniques des câbles et peuvent affecter, pour les conditions de roulage les plus sévères, la durée de vie de ces derniers.

Pour pallier les inconvénients ci-dessus, la demande WO 2005/071157 a proposé des câbles à trois couches de construction 1+M+N, en particulier de construction 1+6+12, dont une des caractéristiques essentielles est qu'une gaine constituée d'une composition de caoutchouc, dite de gommage, recouvre au moins la couche intermédiaire constituée des M fils, le noyau (ou fil unitaire) du câble pouvant être lui-même recouvert ou non de caoutchouc. Grâce à cette architecture spécifique, le câble présente d'excellentes propriétés d'endurance en fatigue-fretting et de résistance aux agressions qui sont notablement améliorées par rapport aux câbles de l'art antérieur. La longévité des pneumatiques et celle de leurs armatures de carcasse et/ou de sommet sont ainsi très sensiblement améliorées.

Toutefois, malgré la présence de la composition de gommage entre les fils, lors de l'utilisation du pneumatique, des agents corrosifs, par exemple de l'eau, peuvent pénétrer, dans les armatures, au contact des éléments de renfort métalliques et les corroder par l'intermédiaires des fils et/ou torons externes, dégradant ainsi rapidement leurs propriétés mécaniques et d'adhésion à la composition de caoutchouc adjacente à ces éléments de renfort métalliques, dite composition de calandrage.

L'utilisation d'un inhibiteur de corrosion permet, d'une part, de prévenir l'action des agents corrosifs grâce à la formation d'un film protecteur autour de l'élément de renfort métallique et, d'autre part, par adsorption sur l'élément de renfort métallique, de ralentir voire de stopper l'action corrosive des agents corrosifs sur et au sein de l'élément de renfort métallique.

On connait du document JP05177772 une composition comprenant un dérivé de la famille des triazines en tant qu'inhibiteur de corrosion. Toutefois, un tel composé est relativement cher. De plus, on souhaite autant que possible limiter la quantité à employer de composés pouvant avoir un impact environnemental.

On connait du document JP2005307368 un câble comprenant une composition de gommage entre les fils, cette composition de gommage comprenant un agent inhibiteur de corrosion volatil, en particulier une combinaison de dicyclohexyle ammonium nitrate et diisopropyle ammonium nitrate.

Ainsi, l'invention a pour but de proposer un produit semi-fini, permettant de lutter efficacement et de façon environnementalement neutre contre la corrosion.

A cet effet, l'invention a pour objet un produit semi-fini comprenant un câble monotoron gommé in situ noyé dans une composition de caoutchouc de calandrage, le câble comprenant :
- une couche interne du câble comprenant N1 fil(s) interne(s),
- une couche externe du câble comprenant N3 fils externes enroulés en hélice autour de la couche interne du câble,
- une composition de caoutchouc de gommage disposée entre la couche interne du câble et la couche externe du câble,
remarquable en ce que
chaque composition de caoutchouc de gommage et de calandrage comprend au moins un inhibiteur de corrosion spécifique tel que décrit à la revendication 1,
le taux du ou des inhibiteurs de corrosion de la composition de caoutchouc de calandrage est différent du taux du ou des inhibiteurs de corrosion de la composition de caoutchouc de gommage.

Avantageusement, la différentiation des taux d'inhibiteurs de corrosion entre la composition de caoutchouc de calandrage et la composition de caoutchouc de gommage permet de limiter la quantité d'inhibiteur de corrosion au strict nécessaire.

Selon un premier aspect de l'invention, l'inhibiteur de corrosion de la composition de caoutchouc de calandrage et/ou de la composition de caoutchouc de gommage est un composé de formule (I) ou un sel de ce composé : 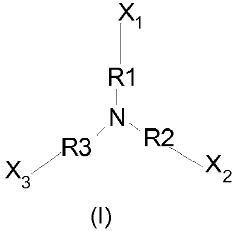 dans laquelle
- chaque groupe R1, R2, R3 représente, indépendamment l'un de l'autre, un groupe alkylène, arylène, arylalkylène, alkylarylène ou cycloalkylène,
- chaque groupe X1, X2 représente, indépendamment l'un de l'autre, -COOH, -CO-NH-OH, -SOOH, -PO(OR)(R') ou -PO(OR)(OR') avec R, R' représentant indépendamment l'un de l'autre un hydrogène ou un groupe alkyl, et
- X3 comprend au moins un groupe -COOH, -CO-NH-OH, -SOOH, -PO(OR)(R') ou -PO(OR)(OR') avec R, R' représentant indépendamment l'un de l'autre hydrogène ou un groupe alkyl.

Selon un deuxième aspect de l'invention, l'inhibiteur de corrosion de la composition de caoutchouc de calandrage et/ou de la composition de caoutchouc de gommage l'inhibiteur de corrosion de la composition de caoutchouc de calandrage et/ou de la composition de caoutchouc de gommage est un composé de formule (II) ou (III) ou un sel de ce composé: 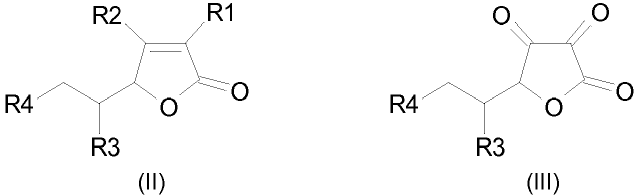 dans laquelle chaque groupe R1, R2, R3 et R4 représente indépendamment l'un de l'autre, un groupe -OH, -O-Alkyl ou -O(C)O-Alkyl.

Selon un troisième aspect de l'invention, l'inhibiteur de corrosion de la composition de caoutchouc de calandrage et/ou de la composition de caoutchouc de gommage l'inhibiteur de corrosion de la composition de caoutchouc de calandrage et/ou de la composition de caoutchouc de gommage est un composé de formule (IV) : 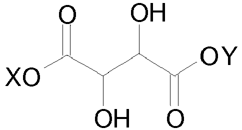 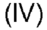 dans laquelle X, Y représentent, indépendamment l'un de l'autre, un cation alcalin ou alcalino-terreux.

D'une part, les composés de formules (I), (II), (III) et (IV) captent les agents corrosifs avant qu'ils n'atteignent les fils protégés par la composition de gommage.

D'autre part, la présence des composés de formules (I), (II), (III) et (IV) dans les compositions de gommage et/ou de calandrage permet également de limiter l'action corrosive des agents corrosifs sur les fils. En effet, on suppose que les composés de formules (I), (II), (III) et (IV) sont transportés par l'agent corrosif, par exemple l'eau, jusqu'aux fils où ils s'adsorbent sur une surface externe des fils que la composition de gommage protège et bloquent l'action des agents corrosifs.

Les composés de formules (I), (II), (III) et (IV) sont relativement neutres à l'égard de l'environnement.

Le composé de formule (I) peut également comprendre une ou plusieurs des caractéristiques ci-dessous, considérées individuellement ou selon toutes les combinaisons techniquement possibles :
- X3 représente -COOH, -CO-NH-OH, -SOOH, -PO(OR)(R') ou - PO(OR)(OR') avec R, R' représentant indépendamment l'un de l'autre hydrogène ou un groupe alkyl ; et/ou
- R1=R2 ; et/ou
- R1 et R2 représentent un groupe alkylène, de préférence méthylène ; et/ou
- R1=R2=R3 ; et/ou
- R1, R2 et R3 représentent un groupe alkylène, de préférence méthylène ; et/ou
- X1=X2 ; et/ou
- X1 et X2 représentent un groupe -PO(OR)(OR') avec R, R' représentant indépendamment l'un de l'autre hydrogène ou un groupe alkyl, de préférence -PO3H₂ ; et/ou
- X3 comprend au moins un groupe -COOH ; et/ou
- X3 représente -COOH.

Les composé de formules (II) ou (III) peuvent également comprendre une ou plusieurs des caractéristiques ci-dessous, considérées individuellement ou selon toutes les combinaisons techniquement possibles :
- R1=R2 ; et/ou
- R1 et R2 représentent le groupe -OH; et/ou
- R3=R4 ; et/ou
- R3 et R4 représentent le groupe -OH ; et/ou
- le composé de formule (II) est l'acide ascorbique ; et/ou
- la composition de caoutchouc comprend au plus 2 pce borne incluse, de préférence au plus 1 pce borne incluse et plus préférentiellement au plus 0,7 pce borne incluse du composé de formule (II) ou (III).

Le composé de formule (IV) peut également comprendre une ou plusieurs des caractéristiques ci-dessous, considérées individuellement ou selon toutes les combinaisons techniquement possibles :
- X, Y sont choisis parmi Na+, K+ et Ca2+ ; et/ou
- X=Y ; et/ou
- X≠Y ; et/ou
- X représente Na+ et Y représente K+ ; et/ou
- la composition de caoutchouc comprend au moins 0,1 pce borne incluse du composé de formule (IV) ; et/ou
- la composition de caoutchouc comprend au plus 2 pce borne incluse, de préférence au plus 1 pce borne incluse et plus préférentiellement au plus 0,7 pce borne incluse du composé de formule (IV).

Dans un mode de réalisation, la composition de caoutchouc de gommage est présente dans chacun des capillaires situés entre le ou les N1 fil(s) interne(s) de la couche interne et les N3 fils externes de la couche externe.

Dans un autre mode de réalisation, le câble comprend en outre une couche intermédiaire du câble comprenant N2 fils intermédiaires enroulés en hélice autour de la couche interne du câble, les N3 fils externes de la couche externe du câble étant enroulés en hélice autour de la couche intermédiaire du câble.

De préférence, la composition de caoutchouc de gommage est présente dans chacun des capillaires situés entre le ou les N1 fil(s) interne(s) de la couche interne et les N2 fils intermédiaires de la couche intermédiaire.

Encore plus préférentiellement, la composition de caoutchouc de gommage est présente dans chacun des capillaires situés entre les N2 fils intermédiaires de la couche intermédiaire et les N3 fils externes de la couche externe. L'invention se rapporte également à produit semi-fini comprenant un câble multi-torons gommé in situ noyé dans une composition de caoutchouc de calandrage, au moins un des torons du câble multi-torons gommé in situ comprenant :
- une couche interne du toron comprenant N1 fil(s) interne(s),
- une couche externe du toron comprenant N3 fils externes enroulés en hélice autour de la couche interne du toron,
- une composition de caoutchouc de gommage disposée entre la couche interne et la couche externe du toron. Chaque composition de caoutchouc de gommage et de calandrage comprend au moins un inhibiteur de corrosion. Le taux du ou des inhibiteurs de corrosion de la composition de caoutchouc de calandrage est différent du taux du ou des inhibiteurs de corrosion de la composition de caoutchouc de gommage.

Dans un mode de réalisation préféré, le câble multi-torons gommé in situ comprend:
- une couche interne du câble comprenant T1 toron(s) interne(s),
- une couche externe du câble comprenant T2 torons externes enroulés en hélice autour de la couche interne du câble,
la composition de caoutchouc de gommage étant disposée entre la couche interne et la couche externe d'un toron interne et/ou externe.

Dans un mode de réalisation préféré, chaque toron externe et/ou interne comprend la composition de caoutchouc de gommage disposée entre la couche interne et la couche externe du toron.

Dans un mode de réalisation de l'invention, la composition de caoutchouc de gommage est présente dans chacun des capillaires situés entre le ou les N1 fil(s) internes de la couche interne du toron et les N3 fils externes de couche externe du toron.

Selon un mode de réalisation, chaque toron interne et/ou externe comprend en outre une couche intermédiaire du toron comprenant N2 fils intermédiaires enroulés en hélice autour de la couche interne du toron, les N3 fils externes de la couche externe du toron étant enroulés en hélice autour de la couche intermédiaire du toron.

Par exemple, la composition de caoutchouc de gommage est présente dans chacun des capillaires situés entre le ou les N1 fil(s) interne(s) de la couche interne et les N2 fils intermédiaires de la couche intermédiaire.

La composition de caoutchouc de gommage peut également être présente dans chacun des capillaires situés entre les N2 fils intermédiaires de la couche intermédiaire et les N3 fils externes de la couche externe.

Le produit semi-fini selon l'invention peut en outre comprendre un câble multi-torons gommé in situ noyé dans une composition de caoutchouc de calandrage. Le câble multi-torons comprenant :
- une couche interne du câble comprenant T1 toron(s) interne(s),
- une couche externe du câble comprenant T2 torons externes enroulés en hélice autour de la couche interne du câble,
- une composition de caoutchouc de gommage disposée entre la couche interne des T1 toron(s) interne(s) du câble et la couche externe des T2 torons externes du câble, Chaque composition de caoutchouc de gommage et de calandrage comprend au moins un inhibiteur de corrosion. Le taux du ou des inhibiteurs de corrosion de la composition de caoutchouc de calandrage est différent du taux du ou des inhibiteurs de corrosion de la composition de caoutchouc de gommage.

L'invention se rapporte également à un produit semi-fini comprenant un câble multi-torons gommé in situ noyé dans une composition de caoutchouc de calandrage, le câble comprenant :
- une couche interne du câble comprenant T1 toron(s) interne(s),
- une couche externe du câble comprenant T2 torons externes enroulés en hélice autour de la couche interne du câble,
- une composition de caoutchouc de gommage disposée entre la couche interne des T1 toron(s) interne(s) du câble et la couche externe des T2 torons externes du câble. Chaque composition de caoutchouc de gommage et de calandrage comprend au moins un inhibiteur de corrosion spécifique. Le taux du ou des inhibiteurs de corrosion de la composition de caoutchouc de calandrage est différent du taux du ou des inhibiteurs de corrosion de la composition de caoutchouc de gommage.

Les avantages évoqués ci-dessus pour le câble monotoron gommé in situ s'appliquent *mutatis mutandis* aux câbles multitorons décrits ci-dessus.

L'invention concerne en outre un produit semi-fini cuit obtenu par réticulation d'un produit semi-fini selon l'invention, comprenant un gradient de concentration en inhibiteur de corrosion entre la composition de caoutchouc calandrage et la composition de caoutchouc de gommage.

L'invention se rapporte également à un pneumatique à l'état cru ou cuit comprenant un produit semi-fini selon l'invention.

L'invention sera mieux comprise à la lecture de la description qui va suivre donnée à titre d'exemple non limitatif de mise en oeuvre de celle-ci, et à l'examen des figures annexées sur lesquelles :
- la figure 1a est une représentation schématique d'une coupe transversale d'un produit semi-fini selon l'invention à l'état cru, avec un câble monotoron de construction 1+6, gommé in situ,
- la figure 1b est une représentation schématique d'une coupe transversale du produit semi-fini de la figure 1a à l'état cuit,
- les figure 2 à 4 sont des représentations schématiques de coupes transversales de câbles monotoron de construction 1+6+12, gommés in situ, pouvant être utilisés dans des produits semi-finis selon différents modes de réalisation de l'invention, et
- les figures 5 à 10 sont des représentations schématiques de coupes transversales de câbles multi-torons de construction 1+6, gommés in situ, et pouvant être utilisés dans des produits semi-finis selon différents modes de réalisation de l'invention et comprenant plusieurs torons de structure 1+6+12.

Dans la présente description, sauf indication expresse différente, tous les pourcentages (%) indiqués sont des % en poids. Le sigle « pce » signifie parties en poids pour cent parties d'élastomère solide.

D'autre part, on entend par câble gommé in situ au sens de l'invention, un câble gommé de l'intérieur, pendant sa fabrication même, donc à l'état brut de fabrication, par une composition de caoutchouc dite de gommage. En d'autres termes, au moins un des capillaires ou interstices (les deux termes interchangeables désignant les vides, espaces libres en l'absence de gomme de remplissage) formés par les fils ou torons adjacents est rempli, au moins en partie (de manière continue ou non selon l'axe du câble), par la composition de gommage de telle manière que pour toute longueur de câble de 2 cm, chaque capillaire comporte au moins un bouchon de gomme.

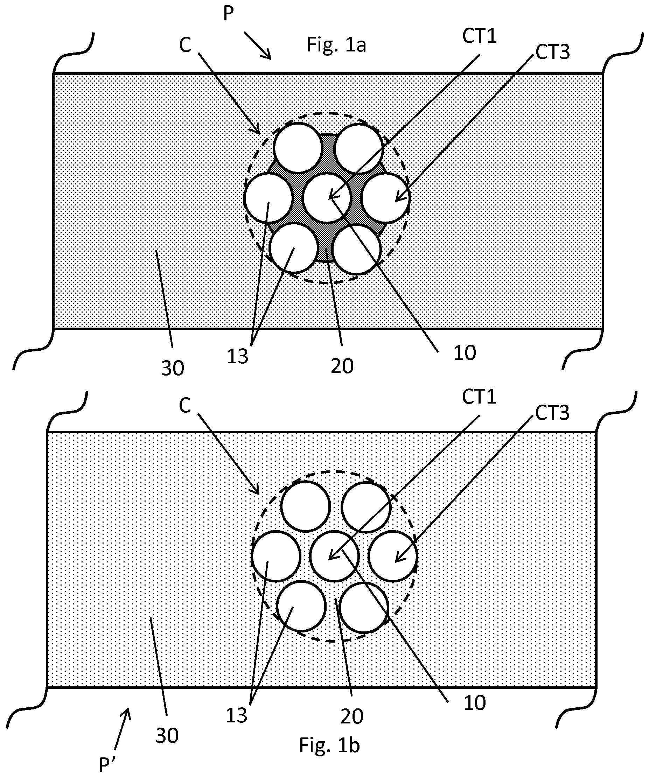

Comme illustré sur la figure 1a, l'invention se rapporte à un produit semi-fini P comprenant un câble monotoron gommé in situ C comprenant au moins une couche interne du câble CT1 et une couche externe du câble CT3. La couche interne du câble CT1 comprend N1 fil(s) interne(s) avec N1 supérieur ou égal à 1. La couche externe du câble CT3 comprend N3 fils externes enroulés en hélice autour de la couche interne du câble CT1.

En particulier la couche interne CT1 peut comporter un ou plusieurs fils (i.e. N1 varie de 1 à 3). La couche externe CT3 peut comprendre de dix à quatorze fils (i.e. N3 varie de 3 à 7).

Le câble selon l'invention est gommé in situ et comprend donc une composition de caoutchouc dite de gommage 20 disposée entre la couche interne du câble CT1 et la couche externe du câble CT3.

Le câble gommé in situ est noyé dans une composition de caoutchouc dite de calandrage 30.

La composition de caoutchouc dite de calandrage 30 peut être appliquée par toute méthode connue par l'homme du métier afin de noyer le câble gommé in situ selon l'invention, par calandrage mais également par moulage. L'appellation « de calandrage » de la composition 30 permet ainsi de distinguer cette dernière de la composition de gommage 20.

Dans ce qui va suivre, les différents constituants ainsi que les taux des compositions de gommage 20 et de calandrage 30 peuvent varier en fonction des propriétés recherchées et conformément aux connaissances générales de l'homme du métier de la caoutchouterie.

Le caoutchouc (ou indistinctement « l'élastomère », les deux étant considérés comme synonymes) des compositions de gommage et/ou de calandrage est préférentiellement un élastomère diénique, c'est-à-dire par définition un élastomère issu au moins en partie (c'est-à-dire un homopolymère ou un copolymère) de monomère(s) diène(s) (i.e., monomère(s) porteur(s) de deux doubles liaisons carbone-carbone, conjuguées ou non).

De manière particulièrement préférentielle, l'élastomère diénique de la composition de gommage et/ou de calandrage est choisi dans le groupe des élastomères diéniques constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

La composition de gommage et/ou de calandrage peut contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

De préférence, la composition de gommage et/ou de calandrage comprend une charge renforçante.

Lorsqu'une charge renforçante est utilisée, on peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTM).

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique. Une telle charge se caractérise généralement, de manière connue, par la présence de groupes hydroxyle (-OH) a sa surface.

L'état physique sous lequel se présente la charge inorganique renforçante est indifférent, que ce soit sous forme de poudre, de micro-perles, de granules, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO2), ou du type alumineuse, en particulier de l'alumine (Al2O3). La silice utilisée peut être toute silice renforçante connue de l'homme du métier, notamment toute silice précipitée ou pyrogenée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices "Ultrasil" 7000 et "Ultrasil" 7005 de la société Evonik, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16387.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que de la silice, ou bien comporterait à sa surface des sites fonctionnels, notamment hydroxyles, nécessitant l'utilisation d'un agent de couplage pour établir la liaison entre la charge et l'élastomère.

Le taux de charge renforçante totale (noir de carbone et/ou charge inorganique renforçante telle que silice) est compris dans un domaine de 5 à 120 pce bornes incluses, plus préférentiellement de 5 à 70 pce bornes incluses et plus préférentiellement également de 5 à 60 pce bornes incluses.

Bien entendu on peut utiliser un seul noir de carbone ou un coupage de plusieurs noirs de carbone de grades ASTM différents. Le noir de carbone peut être également utilisé en coupage avec d'autres charges renforçantes et en particulier des charges inorganiques renforçantes telles que décrites précédemment, et en particulier de la silice. On pourra ainsi utiliser une seule silice ou un coupage de plusieurs silices différentes.

Lorsqu'une charge inorganique (par exemple de la silice) est utilisée dans la composition, seule ou en coupage avec du noir de carbone, son taux est compris dans un domaine de 0 à 70 pce bornes incluses, préférentiellement de 0 à 60 pce bornes incluses, en particulier également de 5 à 70 pce bornes incluses, et encore plus préférentiellement cette proportion varie de 5 à 60 pce bornes incluses.

De préférence, la composition de gommage et/ou de calandrage comprend une charge renforçante comprenant majoritairement en poids de la silice et plus préférentiellement comprenant uniquement de la silice. Par majoritairement, on comprend que la proportion en poids de silice est supérieure à la proportion en poids du reste des autres charges renforçantes de la composition, que ces charges soient organiques, comme par exemple le noir de carbone, ou inorganiques.

De façon avantageuse, la composition de gommage et/ou de calandrage comprend au moins 30 pce borne incluse et de préférence au moins 40 pce borne incluse de silice.

De préférence, la composition de gommage et/ou de calandrage comprend des additifs divers.

La composition de gommage et/ou de calandrage peut comporter également tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que des anti-oxydants, des agents anti-fatigue, des résines renforçantes telles que des bismaleimides, des accepteurs (par exemple résine phénolique novolaque) ou des donneurs de méthylène (par exemple HMT ou H3M).

Comme présenté ci-dessus, la composition de gommage et/ou de calandrage comprend au moins un inhibiteur de corrosion.

Un premier exemple d'inhibiteur de corrosion est un composé conforme à la formule (I) : 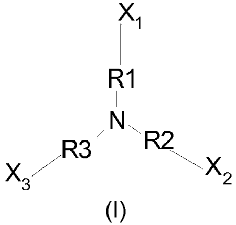 dans laquelle
- chaque groupe R1, R2, R3 représente, indépendamment l'un de l'autre, un groupe alkylène, arylène, arylalkylène, alkylarylène ou cycloalkylène,
- chaque groupe X1, X2 représente, indépendamment l'un de l'autre, -COOH, - CO-NH-OH, -SOOH, -PO(OR)(R') ou -PO(OR)(OR') avec R, R' représentant indépendamment l'un de l'autre hydrogène ou un groupe alkyl, et
- X3 comprend au moins un groupe -COOH, -CO-NH-OH, -SOOH, -PO(OR)(R') ou -PO(OR)(OR') avec R, R' représentant indépendamment l'un de l'autre hydrogène ou un groupe alkyl.

De préférence, X3 représente -COOH, -CO-NH-OH, -SOOH, - PO(OR)(R') ou -PO(OR)(OR') avec R, R' représentant indépendamment l'un de l'autre hydrogène ou un groupe alkyl.

Dans un mode de réalisation, R1 et R2 sont identiques.

Dans le cas où R1 et R2 sont identiques, ils peuvent représenter un groupe alkylène, de préférence méthylène.

Dans un mode de réalisation, R1, R2 et R3 sont identiques.

Dans le cas où R1, R2 et R3 sont identiques, ils peuvent représenter un groupe alkylène, de préférence méthylène.

Dans un mode de réalisation X1 et X2 sont identiques.
Dans le cas où X1 et X2 sont identiques, ils peuvent représenter un groupe - PO(OR)(OR') avec R, R' représentant indépendamment l'un de l'autre hydrogène ou un groupe alkyl, de préférence -PO3H₂.

Dans un mode de réalisation X3 comprend au moins un groupe - COOH, par exemple X3 représente -COOH.

Un deuxième exemple d'inhibiteur de corrosion est un composé conforme aux formules (II) ou (III) ou à des sels de ces composés: 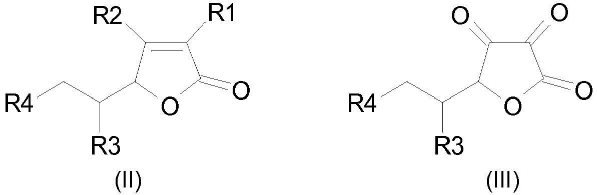 dans laquelle chaque groupe R1, R2, R3 et R4 représente indépendamment l'un de l'autre, un groupe -OH, -O-Alkyl ou -O(C)O-Alkyl.

De préférence, R1 et R2 sont identiques.

Dans le cas où R1 et R2 sont identiques ils sont de préférence un groupe -OH.

Dans un mode de réalisation R3 et R4 sont identiques.

Dans le cas où R1 et R2 sont identiques ils sont de préférence un groupe -OH.

De préférence, le composé de formule (II) est l'acide ascorbique.

De préférence, la composition de gommage 20 et/ou de calandrage 30 comprend au plus 2 pce borne incluse, de préférence au plus 1 pce borne incluse et plus préférentiellement au plus 0,7 pce borne incluse du composé de formule (II) ou (III).

Un troisième exemple d'inhibiteur de corrosion est un composé conforme à la formule (IV) : 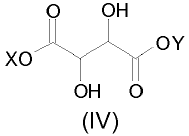 dans laquelle X, Y représentent, indépendamment l'un de l'autre, un cation alcalin ou alcalino-terreux.

De préférence, X, Y sont choisis parmi Na+, K+ et Ca2+.

Dans le cas où X ou Y représente Ca2+, on comprend que ce cation est partagé par deux anions, en d'autres termes que la quantité d'anions est égale à deux fois la quantité de cations.

Dans un mode de réalisation, X=Y.

Dans un autre mode de réalisation, X≠Y.

Avantageusement, X représente Na+ et Y représente K+.

De préférence, la composition de gommage 20 et/ou de calandrage comprend au moins 0,1 pce borne incluse du composé de formule (IV).

De préférence, la composition de gommage 20 et/ou de calandrage comprend au plus 2 pce borne incluse, de préférence au plus 1 pce borne incluse et plus préférentiellement au plus 0,7 pce borne incluse du composé de formule (IV).

Selon un premier aspect de l'invention, le taux du ou des inhibiteurs de corrosion de la composition de caoutchouc de calandrage est strictement supérieur au taux du ou des inhibiteurs de corrosion dans la composition de caoutchouc gommage.

Typiquement, la composition de caoutchouc de calandrage peut comprendre entre 1 et 0,2 pce d'inhibiteur de corrosion et la composition de caoutchouc de gommage entre 0 et 0,1 pce d'inhibiteur de corrosion. Le ou les inhibiteurs de corrosion utilisés dans les compositions de caoutchouc de calandrage et de gommage peuvent être les mêmes. Il est également possible d'utiliser des inhibiteurs de corrosion différents entre les compositions de caoutchouc de calandrage et de gommage.

Avantageusement, un taux d'inhibiteur de corrosion plus élevé dans la composition de calandrage permet de standardiser les compositions de calandrage. En effet, les compositions de caoutchouc de calandrage étant très finement établies, il est préférable pour des raisons de standardisation de pouvoir utiliser une même composition de calandrage pour plusieurs produits, en particulier indépendamment du type de câble utilisé, gommé in situ ou non, et de la composition de caoutchouc de gommage.

Selon un deuxième aspect de l'invention, le taux du ou des inhibiteurs de corrosion de la composition de caoutchouc de calandrage est strictement inférieur au taux du ou des inhibiteurs de corrosion dans la composition de caoutchouc gommage.

Typiquement, la composition de caoutchouc de gommage peut comprendre entre 1 et 0,2 pce d'inhibiteur de corrosion et la composition de caoutchouc de calandrage entre 0 et 0,1 pce d'inhibiteur de corrosion. Le ou les inhibiteurs de corrosion utilisés dans les compositions de caoutchouc de calandrage et de gommage peuvent être les mêmes. Il est également possible d'utiliser des inhibiteurs de corrosion différents entre les compositions de caoutchouc de calandrage et de gommage.

Avantageusement, un taux d'inhibiteur de corrosion plus élevé dans la composition de gommage permet d'obtenir de très bonne performance anticorrosive tout en réduisant la quantité d'inhibiteurs utilisée. En effet, la composition de gommage étant présente en beaucoup plus faible quantité que la composition de calandrage, la quantité totale d'inhibiteurs selon cet aspect de l'invention est beaucoup plus faible. En outre, la composition de gommage étant directement en contact avec les fils des câbles, l'effet anticorrosion est amélioré.

De préférence, la composition de gommage et/ou de calandrage comprend un système de réticulation, plus préférentiellement de vulcanisation.

Le système de réticulation, ici de vulcanisation, comprend des agents donneurs de soufre, par exemple du soufre.

De préférence, le système de vulcanisation comprend des activateurs de vulcanisation tels que l'oxyde de zinc et l'acide stéarique.

De préférence, le système de vulcanisation comprend un accélérateur.

Avantageusement, l'accélérateur est choisi parmi le tétrabenzylthiuram disulfure (en abrégé "TBZTD") et la famille des sulfénamides constituée par le disulfure de 2-mercaptobenzothiazyle (en abrégé "MBTS"), le N-cyclohexyl-2-benzothiazyle sulfénamide (en abrégé "CBS"), le N,N-dicyclohexyl-2-benzothiazyle sulfénamide (en abrégé "DCBS"), le N-ter-butyl-2-benzothiazyle sulfénamide (en abrégé "TBBS"), le N-ter-butyl-2-benzothiazyle sulfénimide (en abrégé "TBSI") et les mélanges de ces composés.

De façon optionnelle, le système de vulcanisation comprend également un retardateur de vulcanisation tel que le N-(Cyclohexylthio)phthalimide (en abrégé "CTP").

Le soufre ou agent donneur de soufre est utilisé à un taux préférentiel compris entre 0,5 et 10 pce bornes incluses, plus préférentiellement compris entre 0,5 et 8,0 pce bornes incluses et très préférentiellement entre 2,0 et 8,0 pce bornes incluses. L'ensemble des accélérateurs, retardateurs et activateurs de vulcanisation est utilisé à un taux préférentiel compris entre 0,5 et 15 pce bornes incluses. Le ou les activateurs de vulcanisation est ou sont utilisés à un taux préférentiel compris entre 0,5 et 10 pce bornes incluses.

Dans une variante, on pourra envisager de supprimer le système de réticulation, c'est-à-dire de disposer d'une composition de gommage et/ou de calandrage dépourvue d'agents donneurs de soufre, par exemple du soufre et d'activateurs de vulcanisation tels que l'oxyde de zinc et l'acide stéarique. Par composition dépourvue d'un composé, on comprend que la composition ne comprend pas ce composé introduit volontairement dans la composition et que ce composé, s'il est présent, l'est sous forme de traces liées par exemple au procédé de fabrication de la composition. Par exemple, la composition dépourvue d'un composé comprend ce dernier dans une quantité inférieure ou égale à 0,1 pce et de préférence inférieure ou égale à 0,05 pce.

Selon un mode de réalisation représenté à la figure 1 d'un câble monotoron gommé in situ C à deux couches, la couche interne CT1 du câble monotoron gommé in situ C comprend un fil interne 10 et la couche externe du câble CT3 comprenant six fils externes 13 enroulés en hélice autour du fil interne.

De préférence, la composition de gommage 20 est présente dans chacun des capillaires ou interstices situés entre le fil interne de la couche interne CT1 et les six fils externes de la couche externe CT3.

Bien que non représenté, il est possible de prévoir des câbles à deux couches avec par exemple trois fils internes et neuf fils externe.

La figure 1b, représente le produit semi-fini de la figure 1a après cuisson. Comme illustré sur la figure 1b, au cours de la cuisson les compositions de gommage 20 et de calandrage 30 se mélangent. Cependant, le produit semi-fini cuit selon l'invention comprend un gradient de concentration en promoteur d'adhésion. Le sens du gradient dépend de la répartition des taux de promoteur d'adhésion entre les compositions de gommage et de calandrage dans le produit semi-fini avant cuisson.

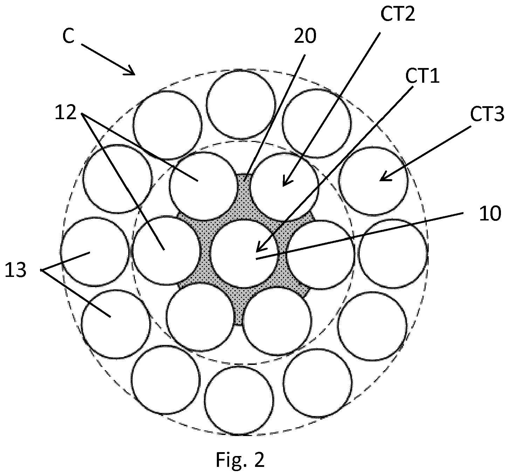

Selon des modes de réalisation illustrés aux figures 2 à 4 de câbles monotoron gommé in situ à trois couches, le câble monotoron gommée in situ selon l'invention C peut comprendre une couche intermédiaire du câble CT2 comprenant N2 fils intermédiaires. Les N2 fils intermédiaires sont enroulés en hélice autour de la couche interne CT1 du câble et les N3 fils externes de la couche externe CT3 du câble sont enroulés en hélice autour de la couche intermédiaire CT2 du câble.

Dans les modes de réalisation illustrés aux figures 2 à 4, la couche interne CT1 comprend un fil interne 10, la couche intermédiaire CT2 comprend six fils intermédiaires 12 et la couche externe CT3 comprend douze fils externes 13. Les câbles des figures 2 à 4 présentent une structure 1+6+12.

L'invention n'est pas limitée à l'utilisation de câbles selon la configuration illustrée aux figures 2 à 4.

En particulier la couche interne CT1 peut comporter plus de fils, par exemple deux ou trois fils assemblés entre eux (i.e. N1 varie de 1 à 3).

En outre, la couche intermédiaire CT2 peut comprendre cinq à sept fils (i.e. N2 varie de 5 à 7).

Finalement la couche externe CT3 peut comprendre de dix à quatorze fils (i.e. N3 varie de 10 à 14).

Selon le mode de réalisation représenté sur la figure 2, la composition de caoutchouc de gommage 20 est présente dans chacun des capillaires situés entre le fil interne 10 de la couche interne CT1 et les six fils intermédiaires 12 de la couche intermédiaire CT2.

Avantageusement, une telle configuration permet d'assurer une bonne protection contre la corrosion des fils interne(s) et intermédiaires, en particulier lorsque la composition de gommage 20 comprend une grande quantité d'inhibiteur de corrosion.

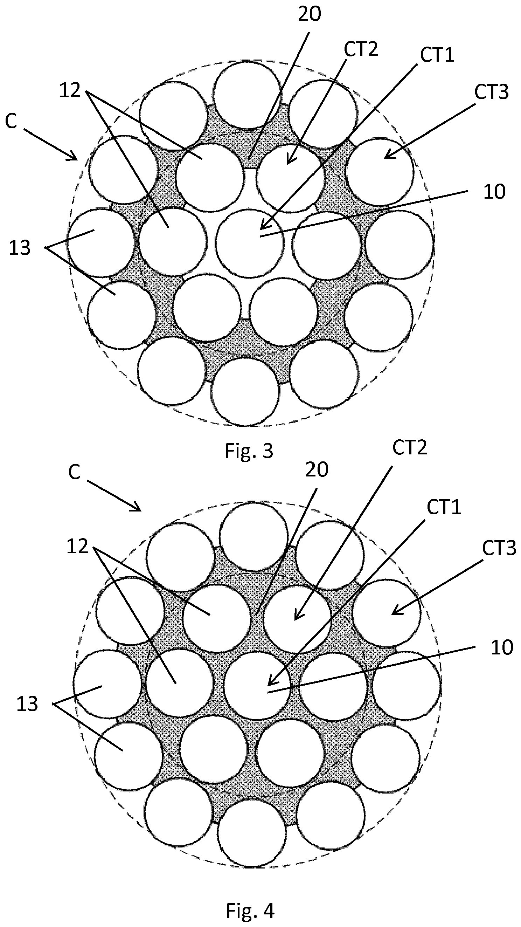

Selon le mode de réalisation représenté sur la figure 3, la composition de caoutchouc de gommage 20 est présente dans chacun des capillaires situés entre les six fils intermédiaires 12 de la couche intermédiaire CT2 et les douze fils externes 13 de la couche externe CT3.

Avantageusement, une telle configuration permet d'assurer une bonne protection contre la corrosion des fils intermédiaires et externes. La composition de gommage 20 permet ainsi de former une barrière de protection anticorrosive entre le coeur du câble et l'extérieur.

Comme représenté sur la figure 4, il est également possible de prévoir que la composition de caoutchouc de gommage 20 est présente dans chacun des capillaires situés entre le fil interne 10 de la couche interne CT1 et les six fils intermédiaires 12 de la couche intermédiaire CT2 et dans chacun des capillaires situés entre les six fils intermédiaires 12 de la couche intermédiaire CT2 et les douze fils externes 13 de la couche externe CT3.

Avantageusement une telle configuration permet d'assurer une protection maximale des différentes couches du câble contre la corrosion, en particulier lors que la composition de gommage comprend une grande quantité d'inhibiteur de corrosion.

L'invention se rapporte également à produit semi-fini comprenant un câble multi-torons gommé in situ noyé dans une composition de caoutchouc de calandrage, au moins un des torons du câble multi-torons gommé in situ comprenant :
- une couche interne du toron (CT1) comprenant N1 fil(s) interne(s),
- une couche externe du toron (CT3) comprenant N3 fils externes enroulés en hélice autour de la couche interne du toron,
- une composition de caoutchouc de gommage disposée entre la couche interne et la couche externe du toron,
et dans lequel chaque composition de caoutchouc de gommage et de calandrage comprend au moins un inhibiteur de corrosion, et
le taux du ou des inhibiteurs de corrosion de la composition de caoutchouc de calandrage est différent du taux du ou des inhibiteurs de corrosion de la composition de caoutchouc de gommage.

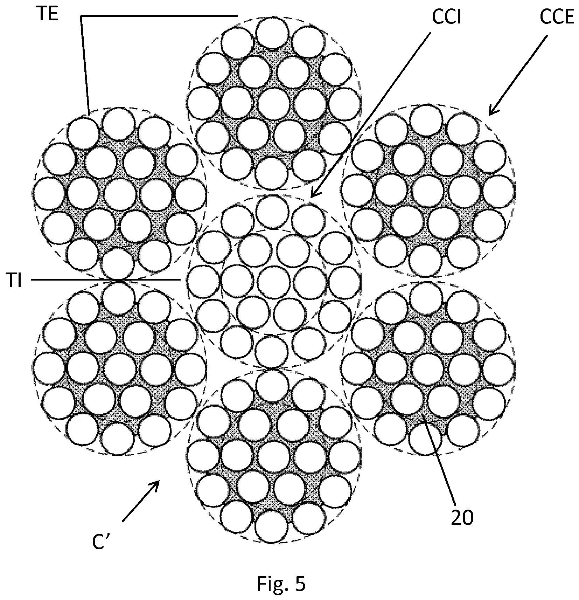

Dans les modes de réalisation illustrés sur les figure 5 à 10, le câble multi-torons gommé in situ C' comprend:
- une couche interne CCI du câble comprenant T1 toron(s) interne(s),
- une couche externe CCE du câble comprenant T2 torons externes enroulés en hélice autour de la couche interne CCI du câble C'.

La composition de caoutchouc de gommage étant disposée entre la couche interne CT1 et la couche externe CT3 d'un toron interne TI et/ou externe TE.

Chaque toron interne TI et externe TE est un câble monotoron comprenant au moins une couche interne du câble CT1 et une couche externe du câble CT3. La couche interne comprend N1 fil(s) interne(s) et la couche externe comprend N3 fils externes enroulés en hélice autour de la couche interne du câble.

Dans les modes de réalisation de câbles multi-torons gommé in situ C' représentés aux figures 5 à 10, chaque toron interne TI et externe TE est un câble monotoron comprend une couche intermédiaire CT2. La couche intermédiaire du câble CT2 comprend N2 fils intermédiaires enroulés en hélice autour de la couche interne CT1 du câble, les N3 fils externes de la couche externe CT3 du câble étant enroulés en hélice autour de la couche intermédiaire CT2 du câble.

Les câbles multi-torons C' pouvant être utilisés dans des produits semi-finis selon l'invention ne sont pas limités à câbles comprenant des torons de structure représentées sur les figures 5 à 10.

Selon des modes de réalisation de l'invention dont des exemples de réalisations sont représentés aux figures 5 à 9 au moins un des torons internes et/ou externes est un câble monotoron selon l'invention, à savoir un câble monotoron gommé in situ avec une composition de caoutchouc comprenant un inhibiteur de corrosion. L'inhibiteur de corrosion comprend un composé de formule (I), (II), (III) ou (IV).

Selon le mode de réalisation représenté sur la figure 5, chaque toron externe TE est un câble monotoron gommé in situ selon l'invention tel que décrit en référence à la figure 4.

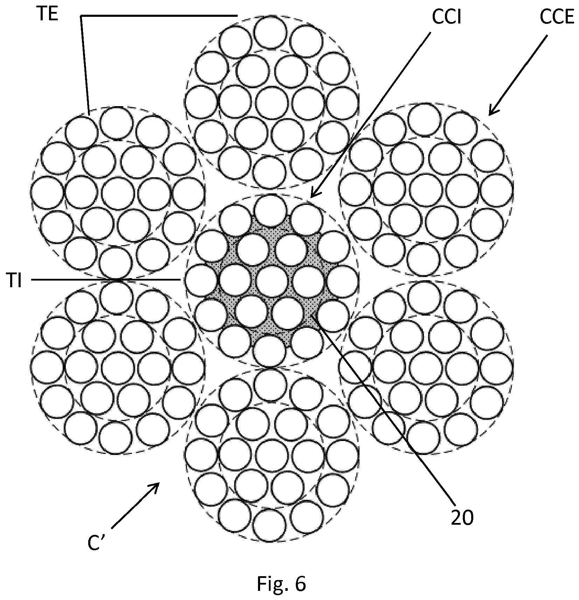

Selon le mode de réalisation représenté sur la figure 6, chaque toron interne TI est un câble monotoron gommé in situ selon l'invention tel que décrit en référence à la figure 4.

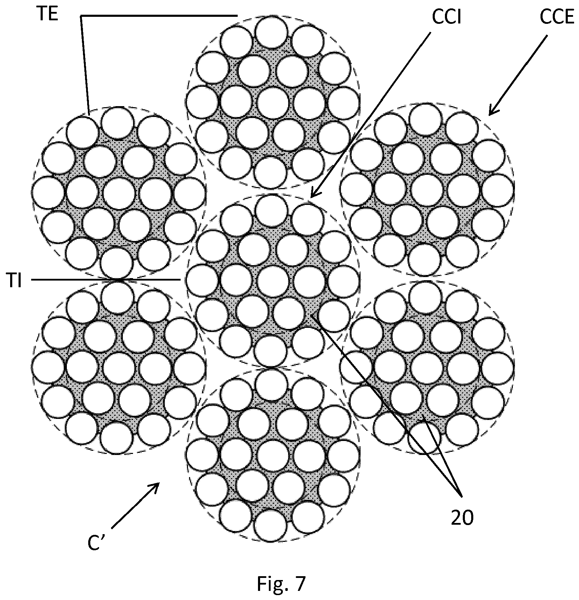

Selon le mode de réalisation représenté sur la figure 7, chaque torons externe TE et chaque toron interne TI est un câble monotoron gommé in situ selon l'invention tel que décrit en référence à la figure 4.

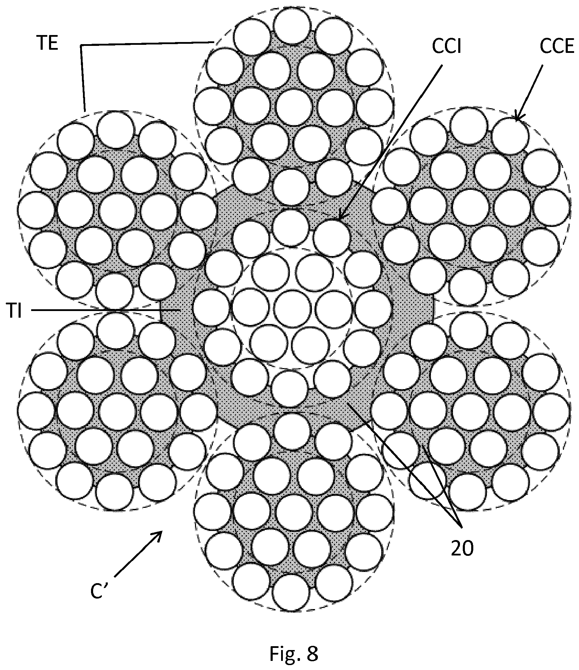

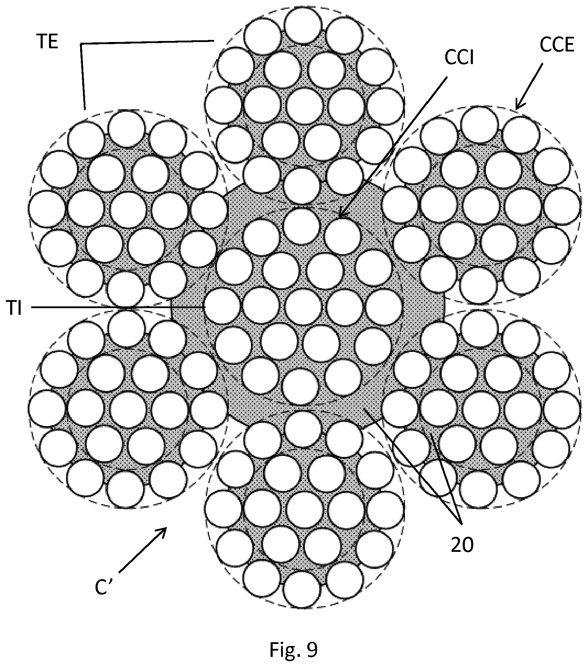

Selon des modes de réalisation représentés aux figures 8 et 9, les câbles multi-torons selon l'invention peuvent comprendre une composition de caoutchouc de gommage 20 disposée entre la couche interne CCI du toron interne TI du câble et la couche externe CCE des torons externes TE du câble, la composition de caoutchouc de gommage 20 comprenant un composé de formule (I), (II), (III) ou (IV).

Dans ces exemples, la composition de caoutchouc de gommage 20 est la même que celle décrite précédemment pour les câbles monotorons.

Selon le mode de réalisation représenté sur la figure 8, chaque toron externe TE est un câble monotoron gommé in situ selon l'invention tel que décrit en référence à la figure 4, le toron interne est un toron non gommé in situ et une composition de caoutchouc de gommage 20 comprenant un composé de formule (I), (II), (III) ou (IV) est disposée entre la couche interne du câble CCI et la couche externe du câble CCE. Dans cet exemple, la composition de caoutchouc de gommage 20 disposée entre la couche interne du câble CCI et la couche externe du câble CCE est la même que celle décrite précédemment pour les câbles monotorons.

Selon le mode de réalisation représenté sur la figure 9, chaque toron externe TE et chaque toron interne TI est un câble monotoron gommé in situ selon l'invention et une composition de caoutchouc de gommage 20 comprenant un composé de formule (I), (II), (III) ou (IV) est disposée entre la couche interne du câble CCI et la couche externe du câble CCE. Dans cet exemple, la composition de caoutchouc de gommage 20 disposée entre la couche interne du câble CCI et la couche externe du câble CCE est la même que celle décrite précédemment pour les câbles monotorons.

L'invention se rapporte également à un câble multi-torons gommé in situ C' comprenant au moins :
- une couche interne CCI du câble comprenant T1 toron(s) interne(s) TI,
- une couche externe CCE du câble comprenant T2 torons externes TE enroulés en hélice autour de la couche interne CCI du câble,
- une composition de caoutchouc de gommage disposée entre la couche interne CCI du câble et la couche externe CCE du câble, la composition de caoutchouc comprenant un inhibiteur de corrosion, comprenant un composé de formule (I), (II), (III) ou (IV).

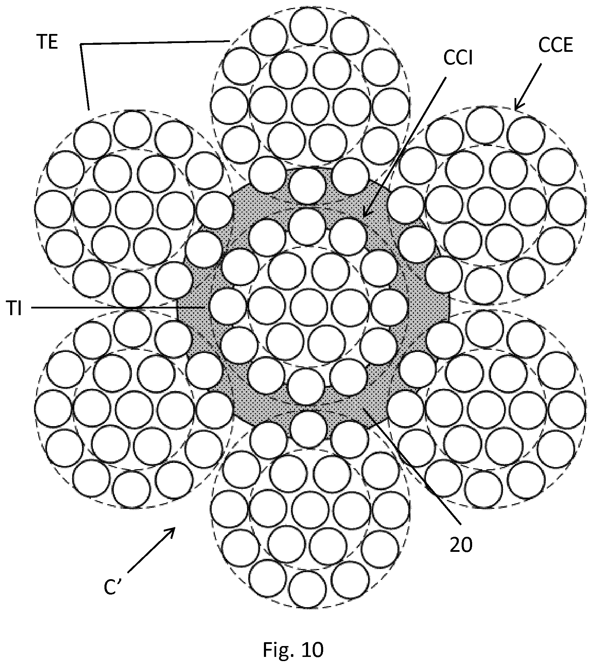

Dans le mode de réalisation représenté sur la figure 10, les torons sont des câbles monotoron non gommé in situ. Une composition de caoutchouc de gommage 20 comprenant un composé de formule (I), (II), (III) ou (IV) est disposée entre la couche interne du câble CCI et la couche externe du câble CCE. De préférence, la composition de caoutchouc de gommage 20 disposée entre la couche interne du câble CCI et la couche externe du câble CCE est la même que celle décrite précédemment pour les câbles monotorons.

Afin de fabriquer les câbles décrits ci-dessus, on dispose la composition de caoutchouc de gommage 20 conformément aux connaissances générale de l'homme du métier pendant l'assemblage des différentes couches du câble. On fait notamment référence aux publications EP1699973, WO2006/013077, WO2007/090603, WO09/083212, WO09/083213, WO10/012411, WO10/054790, WO10/054791, WO10/112444, WO10/112445, WO10/139583, WO11/000963, WO11/000964, WO11/000950 et WO11/000951.

Le produit semi-fini selon l'invention est tout particulièrement destiné à être utilisé comme nappe destiné à des véhicules industriels choisis parmi camionnettes, "*Poids-lourd*"*-* i.e., métro, bus, engins de transport routier (camions, tracteurs, remorques), véhicules hors-la-route-, engins agricoles ou de génie civil, avions, autres véhicules de transport ou de manutention.

L'invention concerne en outre les pneumatiques destinés aux véhicules industriels cités ci-dessus, plus particulièrement les pneumatiques Poids-lourd ou génie civil, ainsi que les tissus composites comportant une matrice de composition de caoutchouc de calandrage renforcée d'un câble gommé in situ selon l'invention, utilisables comme nappe d'armature de carcasse ou de sommet de tels pneumatiques.

### TESTS COMPARATIFS

On a comparé des compositions «Témoins » conforme à l'état de la technique connu de l'homme du métier dépourvue d'inhibiteur de corrosion et des compositions de gommage dite « Invention » de produits semi-finis conformes à l'invention.

Les quantités des composants des compositions « Témoins » et « Inventions » sont rassemblées dans le tableau 1.1 pour les composés de formule (I), dans le tableau 1.2 pour les composés de formule (II) et (III) et dans le tableau 1.3 pour les composés de formule (IV), et sont exprimées en parties pour 100 parties en poids d'élastomère (pce).

**Tableau 1.1**

| Composition | **Témoin 1** | **Témoin 2** | **Invention 1** |
|---|---|---|---|
| Elastomère diénique | 100 | 100 | 100 |
| Noir de carbone | 4 | 4 | 4 |
| Silice | 40 | 40 | 40 |
| Anti-oxydant | 2 | 2 | 2 |
| Organosilane | 4 | 4 | 4 |
| ZnO | 8 | 8 | 8 |
| Acide stéarique | 1 | 1 | 1 |
| Soufre | 6 | 6 | 6 |
| Accélérateur | 1 | 1 | 1 |
| Retardateur | 0,2 | 0,2 | 0,2 |
| Glycine | 0 | 0,5 | 0 |
| Inhibiteur de corrosion | 0 | 0 | 0,5 |

**Tableau 1.2**

| **Composition** | **Témoin 3** | **Invention 2** |
|---|---|---|
| Elastomère diénique | 100 | 100 |
| Silice | 40 | 40 |
| Anti-oxydant | 2 | 2 |
| Organosilane | 4 | 4 |
| Sel de cobalt | 1 | 1 |
| ZnO | 8 | 8 |
| Acide stéarique | 1 | 1 |
| Soufre | 6 | 6 |
| Accélérateur | 1 | 1 |
| Retardateur | 0,2 | 0,2 |
| Inhibiteur de corrosion | 0 | 0,5 |

**Tableau 1.3**

| **Composition** | **Témoin 4** | **Invention 3** | **Invention 4** | **Invention 5** | **Invention 6** | **Invention 7** | **Invention 8** |
|---|---|---|---|---|---|---|---|
| X | / | Na⁺ | Na⁺ | Na⁺ | K⁺ | K⁺ | Ca²⁺ |
| Y | / | K⁺ | Na⁺ | Na⁺ | K⁺ | K⁺ | Ca²⁺ |
| Elastomère diénique | 100 | 100 | 100 | 100 | 100 | 100 | 100 |
| Noir de carbone | 4 | 4 | 4 | 4 | 4 | 4 | 4 |
| Silice | 40 | 40 | 40 | 40 | 40 | 40 | 40 |
| Anti-oxydant | 2 | 2 | 2 | 2 | 2 | 2 | 2 |
| Organosilane | 4 | 4 | 4 | 4 | 4 | 4 | 4 |
| ZnO | 8 | 8 | 8 | 8 | 8 | 8 | 8 |
| Acide stéarique | 1 | 1 | 1 | 1 | 1 | 1 | 1 |
| Soufre | 6 | 6 | 6 | 6 | 6 | 6 | 6 |
| Accélérateur | 1 | 1 | 1 | 1 | 1 | 1 | 1 |
| Retardateur | 0,2 | 0,2 | 0,2 | 0,2 | 0,2 | 0,2 | 0,2 |
| Inhibiteur de corrosion | 0 | 0,5 | 0,2 | 0,4 | 0,2 | 0,4 | 0,3 |

### Compositions testées

L'inhibiteur de corrosion de la composition « Invention 1 » est conforme à la formule (I). Il s'agit en l'espèce de la N,N-bis(phosphonométhyl)glycine (en abrégé « BPMG ») de formule ci-dessous et disponible auprès de la société Sigma-Aldrich.

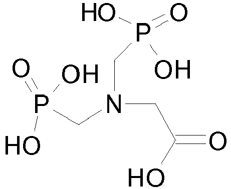

La composition « Invention 1 » comprend au moins 0,1 pce borne incluse et au plus 2 pce borne incluse, de préférence au plus 1 pce borne incluse et plus préférentiellement au plus 0,7 pce borne incluse du composé de formule (I), ici la BPMG.

L'inhibiteur de corrosion de la composition « Invention 2 » est conforme à la formule (II). Il s'agit en l'espèce de l'acide ascorbique de formule, ci-dessous.

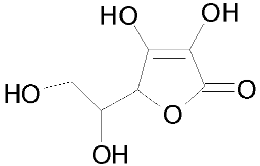

Chaque composition « Invention 3 à 8 » comprend au moins 0,1 pce borne incluse et au plus 2 pce borne incluse, de préférence au plus 1 pce borne incluse et plus préférentiellement au plus 0,7 pce borne incluse du composé de formule (IV).

Dans les compositions du tableau 1.1, l'élastomère diénique est du caoutchouc naturel. La silice est une silice type"HD"-"Zeosil 1165MP"de la société RHODIA. Le noir de carbone est du type N330. L'anti-oxydant est le N-1, 3-diméthylbutyl-N-phényl-para-phénylènediamine ("Santoflex 6-PPD"de la société FLEXSYS). L'organosilane est le TESPT ("Si69" de la société DEGUSSA). L'accélérateur de vulcanisation est le N-cyclohexyl-2-benzothiazyl-sulfénamide ("Santocure CBS" de la société FLEXSYS). Le retardateur de vulcanisation est le N-(Cyclohexylthio)phthalimide (n°CAS 17796-82-6).

Dans les compositions du tableau 1.2, l'élastomère diénique est du caoutchouc naturel. La silice est une silice type"HD"-"Zeosil 1165MP"de la société RHODIA. Le noir de carbone est du type N330. L'anti-oxydant est le N-1, 3-diméthylbutyl-N-phényl-para-phénylènediamine ("Santoflex 6-PPD"de la société FLEXSYS). L'organosilane est le TESPT ("Si69" de la société DEGUSSA). Le sel de cobalt est le naphténate de cobalt. L'accélérateur de vulcanisation est le N-cyclohexyl-2-benzothiazyl-sulfénamide ("Santocure CBS" de la société FLEXSYS). Le retardateur de vulcanisation de la composition T est le N-(Cyclohexylthio)phthalimide (n°CAS 17796-82-6).

Dans les compositions du tableau 1.3, l'élastomère diénique est du caoutchouc naturel. La silice est une silice type"HD"-"Zeosil 1165MP"de la société RHODIA. Le noir de carbone est du type N330. L'anti-oxydant est le N-1, 3-diméthylbutyl-N-phényl-para-phénylènediamine ("Santoflex 6-PPD"de la société FLEXSYS). L'organosilane est le TESPT ("Si69" de la société EVONIK). L'accélérateur de vulcanisation est le N-cyclohexyl-2-benzothiazyl-sulfénamide ("Santocure CBS" de la société FLEXSYS). Le retardateur de vulcanisation de la composition T est le N-(Cyclohexylthio)phthalimide (n°CAS 17796-82-6). Les inhibiteurs de corrosions sont disponibles auprès de la société Sigma-Aldrich.

### Préparation des compositions testées

Les compositions sont fabriquées dans des mélangeurs appropriés, en utilisant deux phases de préparation successives bien connues de l'homme du métier: une première phase de travail ou malaxage thermo-mécanique (parfois qualifiée de phase "non-productive") à haute température, jusqu'à une température maximale (notée Tmax) comprise entre 110°C et 190°C, de préférence entre 130°C et 180°C, suivie d'une seconde phase de travail mécanique (parfois qualifiée de phase"productive") à plus basse température, typiquement inférieure à 110°C, par exemple entre 60°C et 100°C, phase de finition au cours de laquelle est incorporé le système de vulcanisation. De telles phases ont été décrites par exemple dans les documents précités EP 501227, EP 735088, WO00/05300, WO00/05301 ou WO02/083782.

A titre d'exemple, la première phase (non-productive) est conduite en une seule étape thermomécanique au cours de laquelle on introduit, dans un mélangeur approprié tel qu'un mélangeur interne usuel, dans un premier temps tous les constituants de base nécessaires (élastomère diénique, charge inorganique renforçante, anti-oxydant, inhibiteur de corrosion et agent de couplage), puis dans un deuxième temps, par exemple après une à deux minutes de malaxage, les éventuels agents de mise en oeuvre complémentaires et autres additifs divers, à l'exception du système de vulcanisation. Lorsque la densité apparente de la charge inorganique renforçante est faible (cas général des silices), il peut être avantageux de fractionner son introduction en deux ou plusieurs parties. Une seconde étape de travail thermomécanique peut être ajoutée dans ce mélangeur interne, après tombée du mélange et refroidissement intermédiaire (température de refroidissement de préférence inférieure à 100°C), dans le but de faire subir aux compositions un traitement thermomécanique complémentaire, notamment pour améliorer encore la dispersion, dans la matrice élastomérique, de la charge inorganique renforçante et de son agent de couplage. La durée totale du malaxage, dans cette phase non-productive, est de préférence comprise entre 2 et 10 minutes.

Après refroidissement du mélange ainsi obtenu, on incorpore alors, si nécessaire, le système de vulcanisation à basse température, généralement dans un mélangeur externe tel qu'un mélangeur à cylindres ; le tout est alors mélangé (phase productive) pendant quelques minutes, par exemple entre 5 et 15 minutes.

La composition finale ainsi obtenue est ensuite calandrée, par exemple sous la forme d'une feuille, d'une plaque ou encore extrudée, par exemple pour former un profilé de caoutchouc utilisé pour la fabrication de produits semi-finis selon l'invention tels que des nappes d'armatures de sommet, des nappes d'armatures de carcasse ou de produit fini tel qu'un pneumatique selon l'invention dans lesquels un câble est noyé dans la composition de caoutchouc.

La vulcanisation (ou cuisson) est conduite de manière connue à une température généralement comprise entre 130°C et 200°C, de préférence sous pression, pendant un temps suffisant qui peut varier par exemple entre 5 et 90 min en fonction notamment de la température de cuisson, du système de vulcanisation adopté, de la cinétique de vulcanisation de la composition considérée ou de la taille du pneumatique.

### Test d'adhésion

On réalise un test d'arrachement conformément à la norme ASTM D2229 sur des éprouvettes comprenant des câbles métalliques de structure 2.30NF dont une portion est intercalée entre deux bandes réalisées dans la composition de caoutchouc et une autre portion est laissée libre.

On mesure la force nécessaire pour arracher le câble des deux bandes de caoutchouc. On réalise la mesure pour 15 câbles. La valeur retenue est la moyenne des mesures sur ces 15 câbles. Plus la valeur de la force est élevée plus l'adhésion entre le câble et la composition de caoutchouc est grande.

Toutes les valeurs sont données en base 100 par rapport aux compositions «Témoins » correspondantes. Si, pour la composition testée, la force nécessaire à l'arrachement est supérieure à la force nécessaire à l'arrachement des câbles de l'éprouvette témoin, l'adhésion des câbles à la composition de caoutchouc testée est meilleure que celle de l'éprouvette témoin et donc la valeur relative retenue est supérieure à 100 (la valeur relative de l'éprouvette témoin est égale à 100). A l'inverse, si, pour une composition donnée, la force nécessaire à l'arrachement est inférieure à la force nécessaire à l'arrachement des câbles de l'éprouvette témoin, l'adhésion des câbles à la composition de caoutchouc testée est moins bonne que celle de l'éprouvette témoin et donc la valeur relative retenue est inférieure à 100.

Le test d'adhésion décrit ci-dessus est réalisé avec des éprouvettes vulcanisées et/ou vieillies dans différentes conditions A, B, C, D, E et F.

La condition A (cuisson normale) correspond à un test effectué sur une éprouvette cuite pendant une durée inférieure à 1 heure à une température supérieure à 100°C.

La condition B (vieillissement humide à cru) correspond à un test effectué sur une éprouvette comprenant la composition crue et vieillie pendant plusieurs jours à une température supérieure à 30°C et à plus de 50% d'humidité relative.

La condition C (vieillissement sous atmosphère corrosive) correspond à un test effectué sur une éprouvette comprenant la composition crue et vieillie pendant plusieurs jours dans une solution de NaCl.

La condition D (vieillissement humide à cuit) correspond à un test effectué sur une éprouvette cuite pendant une durée inférieure à 1 heure à une température supérieure à 100°C et vieillie pendant plusieurs jours à une température supérieure à 30°C et à plus de 50% d'humidité relative.

La condition E (surcuisson) correspond à un test effectué sur une éprouvette cuite pendant une durée supérieure à 1 h à une température supérieure à 100°C.

La condition F (vieillissement vapeur) correspond à un test effectué sur une éprouvette comprenant la composition crue et vieillie pendant plusieurs heures à une température supérieure à 100°C.

On comprendra que plus l'adhésion mesurée est élevée, meilleure est la performance anti-corrosive de la composition de gommage et donc meilleure sont les propriétés d'endurance en fatigue-fretting et de résistance aux agressions du pneumatique comprenant un câble comprenant une telle composition de gommage.

On a rassemblé les résultats du test d'adhésion dans les différentes conditions dans les tableau 2.1, 2.2 et 2.3 ci-dessous.

**Tableau 2.1**

| | **Témoin 1** | **Témoin 2** | **Invention 1** |
|---|---|---|---|
| **A** | 100 | 100 | 100 |
| **B** | 100 | 100 | 100 |
| **c** | 100 | 85 | 110 |
| **D** | 100 | 90 | 109 |

**Tableau 2.2**

| | **Témoin 3** | **Invention 2** |
|---|---|---|
| **A** | 100 | 100 |
| **B** | 100 | 100 |
| **C** | 100 | 113 |
| **D** | 100 | 110 |
| **E** | 100 | 100 |
| **F** | 100 | 100 |

**Tableau 2.3**

| | **Témoin 4** | **Invention 3** | **Invention 4** | **Invention 5** | **Invention 6** | **Invention 7** | **Invention 8** |
|---|---|---|---|---|---|---|---|
| **A** | 100 | 105 | 100 | 100 | 100 | 100 | 100 |
| **B** | 100 | 104 | 110 | 108 | 109 | 100 | 105 |
| **C** | 100 | 110 | 108 | 110 | 110 | 110 | 108 |
| **D** | 100 | 108 | 100 | 100 | 100 | 100 | 100 |

Comme illustré au tableau 2.1, la composition « Invention 1 » présente des performances d'adhésion au moins équivalentes à la composition « Témoin 1 » de l'état de la technique quelles que soient les conditions de test sauf en conditions C (vieillissement sous atmosphère corrosive) et D (vieillissement humide à cuit), conditions pour lesquelles la composition « Invention 1 » présente des propriétés d'adhésion supérieures à celles de la composition « Témoin 1 » de l'état de la technique. La composition « Invention 1 » permet donc d'inhiber la corrosion créée par les agents corrosifs. La composition « Témoin 2 » n'est pas efficace contre la corrosion.

Comme l'illustre le tableau 2.2 la composition « Invention 2 » présente des performances d'adhésion au moins équivalentes à la composition « Témoin 3 » de l'état de la technique quelles que soient les conditions de test sauf en conditions C (vieillissement sous atmosphère corrosive) et D (vieillissement humide à cuit), conditions pour lesquelles la composition « Invention 3 » présente des propriétés d'adhésion supérieures à celles de la composition « Témoin » de l'état de la technique. La composition selon l'invention permet donc d'inhiber la corrosion créée par les agents corrosifs des conditions C et D.

Comme illustré par le tableau 2.3, les compositions de gommage « Invention 3 » à « Invention 8 » présentent des performances d'adhésion proches, voire supérieures à la composition « Témoin 4 » de l'état de la technique pour la plupart des conditions de test. En particulier, on notera que toutes les compositions de gommage « Invention 3 » à « Invention 8 » présentent des performances d'adhésion dans des conditions corrosives (condition C) supérieures à celle de la composition « Témoin 4 ». Les compositions de gommage « Invention 3 » à « Invention 8 » permettent donc d'inhiber la corrosion créée par les agents corrosifs dans la plupart des conditions.

### Propriétés avant cuisson

### Plasticité Mooney

La plasticité Mooney est réalisée en utilisant un consistomètre selon la norme ASTM D-1646-99. La mesure de plasticité Mooney se fait selon le principe suivant : le mélange généralement cru est moulé dans une enceinte cylindrique chauffée à une température donnée, usuellement 100°C et ici 60°C. Après une minute de préchauffage, un rotor de type L tourne au sein de l'éprouvette à 2 tours par minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

### Propriétés après cuisson

### Essais de traction

Ces essais de traction permettent de déterminer les contraintes d'élasticité et les propriétés à la rupture des compositions de gomme. Sauf indication différente, ils sont effectués conformément à la norme française NF T 46-002 de septembre 1988. On mesure en seconde élongation (i.e., après un cycle d'accommodation au taux d'extension prévu pour la mesure elle-même) le module sécant nominal (ou contrainte apparente, en MPa) à 10% d'allongement (notés MA10), à 100% d'allongement (notés MA100) et à 300% d'allongement (notés MA300).

On a rassemblé les résultats des mesures de propriétés avant et après cuisson des compositions « Témoin » et des compositions « Invention » dans les tableaux 3.1, 3.2 et 3.3 ci-dessous. Les valeurs des différentes propriétés sont indiquées en unité relative (U.R) par rapport aux valeurs des propriétés correspondantes de la composition « Témoin ». Lorsque la valeur de la propriété est supérieure à 100, la valeur de la propriété est supérieure à celle de la composition « Témoin ». A l'inverse, lorsque la valeur de la propriété est inférieure à 100, la valeur de la propriété est inférieure à celle de la composition « Témoin ».

**Tableau 3.1**

| **Composition** | **Témoin 1** | **Témoin 2** | **Invention 1** |
|---|---|---|---|
| **Propriétés avant cuisson** | | | |
| Mooney (UM) | 100 | 100 | 98 |

| **Propriétés après cuisson** | | | |
|---|---|---|---|
| MA10 (MPa) | 100 | 100 | 94 |
| MA100 (MPa) | 100 | 100 | 103 |
| MA300 (MPa) | 100 | 100 | 104 |

**Tableau 3.2**

| **Composition** | **Témoin 3** | **Invention 2** |
|---|---|---|
| **Propriétés avant cuisson** | | |
| Mooney (UM) | 85,10 | 87,50 |

| **Propriétés après cuisson** | | |
|---|---|---|
| MA10 (MPa) | 8,51 | 8,12 |
| MA100 (MPa) | 3,49 | 3,46 |
| MA300 (MPa) | 3,35 | 3,35 |

**Tableau 3.3**

| **Composition** | **Témoin 4** | **Invention 3** |
|---|---|---|
| **Propriétés avant cuisson** | | |
| Mooney (U.R) | 100 | 101 |

| **Propriétés après cuisson** | | |
|---|---|---|
| MA10 (U.R) | 100 | 102 |
| MA100 (U.R) | 100 | 103 |
| MA300 (U.R) | 100 | 103 |

La plasticité Mooney et les modules sécants nominaux à 10%, 100% et 300% des compositions « Invention » sont peu modifiés par rapport à ceux des compositions « Témoin ».

Bien entendu, l'invention n'est pas limitée aux exemples de réalisation précédemment décrits.

On pourra prévoir de mélanger plusieurs inhibiteurs de corrosion.

Par exemple que certains fils pourraient être à section non circulaire, par exemple déformé plastiquement, notamment à section sensiblement ovale ou polygonale, par exemple triangulaire, carrée ou encore rectangulaire.

Les fils, de section circulaire ou non, par exemple un fil ondulé, pourront être vrillés, tordus en forme d'hélice ou en zig-zag. Dans de tels cas, il faut bien sûr comprendre que le diamètre du fil représente le diamètre du cylindre de révolution imaginaire qui entoure le fil (diamètre d'encombrement), et non plus le diamètre (ou toute autre taille transversale, si sa section n'est pas circulaire) du fil d'âme lui-même.

Pour des raisons de faisabilité industrielle, de coût et de performance globale, on préfère mettre en oeuvre l'invention avec des fils linéaires, c'est-à-dire droit, et de section transversale conventionnelle circulaire.

On pourra également envisager un produit semi fini comprenant un câble multitorons gommé in situ conforme à l'invention et de structure 1xN dans laquelle N représente le nombre de torons enroulés ensemble en hélice.

On pourra également combiner les caractéristiques des différents modes de réalisation décrits ou envisagés ci-dessus sous réserve que celles-ci soient compatibles entre elles.

## Revendications

1. Produit semi-fini (P) comprenant un câble monotoron gommé in situ (C) noyé dans une composition de caoutchouc de calandrage (30), le câble comprenant :
- une couche interne du câble (CT1) comprenant N1 fil(s) interne(s),
- une couche externe du câble (CT3) comprenant N3 fils externes enroulés en hélice autour de la couche interne du câble,
- une composition de caoutchouc de gommage (20) disposée entre la couche interne du câble et la couche externe du câble,
**caractérisé en ce que**
chaque composition de caoutchouc de gommage (20) et de calandrage (30) comprend au moins un inhibiteur de corrosion,
le taux du ou des inhibiteurs de corrosion de la composition de caoutchouc de calandrage (30) est différent du taux du ou des inhibiteurs de corrosion de la composition de caoutchouc de gommage (20),
l'inhibiteur de corrosion de la composition de caoutchouc de calandrage (30) et/ou de la composition de caoutchouc de gommage (20) est choisi parmi :
un composé de formule (I) ou un sel de ce composé : 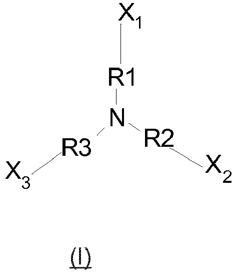 dans laquelle
- chaque groupe R1, R2, R3 représente, indépendamment l'un de l'autre, un groupe alkylène, arylène, arylalkylène, alkylarylène ou cycloalkylène,
- chaque groupe X1, X2 représente, indépendamment l'un de l'autre, -COOH, -CO-NH-OH, -SOOH, -PO(OR)(R') ou -PO(OR)(OR') avec R, R' représentant indépendamment l'un de l'autre un hydrogène ou un groupe alkyl, et
X3 comprend au moins un groupe -COOH, -CO-NH-OH, -SOOH, -PO(OR)(R') ou - PO(OR)(OR') avec R, R' représentant indépendamment l'un de l'autre hydrogène ou un groupe alkyl,
un composé de formule (II) ou (III) ou un sel de ce composé: 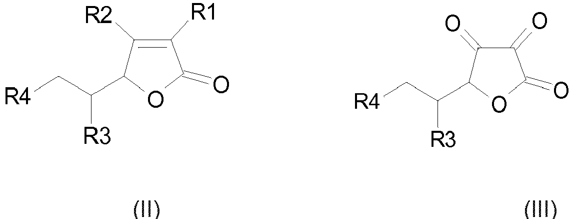 dans laquelle chaque groupe R1, R2, R3 et R4 représente indépendamment l'un de l'autre, un groupe -OH, -O-Alkyl ou -O(C)O-Alkyl;
un composé de formule (IV) : 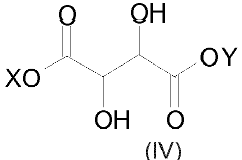 dans laquelle X, Y représentent, indépendamment l'un de l'autre, un cation alcalin ou alcalino-terreux ;
et leurs mélanges.

2. Produit semi-fini (P) selon la revendication 1, dans lequel le taux du ou des inhibiteurs de corrosion de la composition de caoutchouc de calandrage (30) est strictement supérieur au taux du ou des inhibiteurs de corrosion de la composition de caoutchouc de gommage (20).

3. Produit semi-fini (P) selon la revendication 1, dans lequel le taux du ou des inhibiteurs de corrosion de la composition de caoutchouc de calandrage (30) est strictement inférieur au taux du ou des inhibiteurs de corrosion de la composition de caoutchouc de gommage (20).

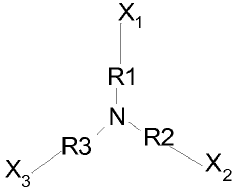

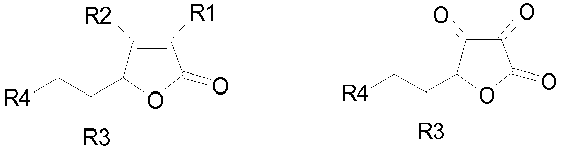

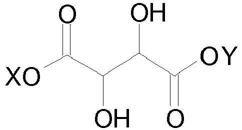

4. Produit semi-fini (P) selon l'une quelconque des revendications précédentes, dans lequel la composition de caoutchouc de gommage (20) est présente dans chacun des capillaires situés entre le ou les N1 fil(s) interne(s) de la couche interne (CT1) et les N3 fils externes de couche externe (CT3).

5. Produit semi-fini (P) selon l'une quelconque des revendications précédentes, dans lequel le câble (C) comprend une couche intermédiaire du câble (CT2) comprenant N2 fils intermédiaires enroulés en hélice autour de la couche interne (CT1) du câble, les N3 fils externes de la couche externe (CT3) du câble étant enroulés en hélice autour de la couche intermédiaire (CT2) du câble.

6. Produit semi-fini (P) selon la revendication 5, dans lequel la composition de caoutchouc de gommage (20) est présente dans chacun des capillaires situés entre le ou les N1 fil(s) interne(s) de la couche interne (CT1) et les N2 fils intermédiaires de la couche intermédiaire (CT2).

7. Produit semi-fini (P) selon la revendication 5 ou 6, dans lequel la composition de caoutchouc de gommage (20) est présente dans chacun des capillaires situés entre les N2 fils intermédiaires de la couche intermédiaire (CT2) et les N3 fils externes de la couche externe (CT3).

8. Produit semi-fini (P) comprenant un câble multi-torons gommé in situ (C') noyé dans une composition de caoutchouc de calandrage (30),
au moins un des torons du câble multi-torons gommé in situ comprenant :
- une couche interne du toron (CT1) comprenant N1 fil(s) interne(s),
- une couche externe du toron (CT3) comprenant N3 fils externes enroulés en hélice autour de la couche interne du toron,
- une composition de caoutchouc de gommage (20) disposée entre la couche interne (CT1) et la couche externe (CT3) du toron
**caractérisé en ce que**
chaque composition de caoutchouc de gommage (20) et de calandrage (30) comprend au moins un inhibiteur de corrosion,
le taux du ou des inhibiteurs de corrosion de la composition de caoutchouc de calandrage (30) est différent du taux du ou des inhibiteurs de corrosion de la composition de caoutchouc de gommage (20),
l'inhibiteur de corrosion de la composition de caoutchouc de calandrage (30) et/ou de la composition de caoutchouc de gommage (20) est choisi parmi :
un composé de formule (I) ou un sel de ce composé : 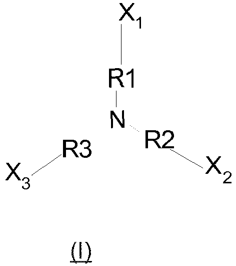 dans laquelle
- chaque groupe R1, R2, R3 représente, indépendamment l'un de l'autre, un groupe alkylène, arylène, arylalkylène, alkylarylène ou cycloalkylène,
- chaque groupe X1, X2 représente, indépendamment l'un de l'autre, -COOH, -CO-NH-OH, -SOOH, -PO(OR)(R') ou -PO(OR)(OR') avec R, R' représentant indépendamment l'un de l'autre un hydrogène ou un groupe alkyl, et
X3 comprend au moins un groupe -COOH, -CO-NH-OH, -SOOH, -PO(OR)(R') ou - PO(OR)(OR') avec R, R' représentant indépendamment l'un de l'autre hydrogène ou un groupe alkyl,
un composé de formule (II) ou (III) ou un sel de ce composé: 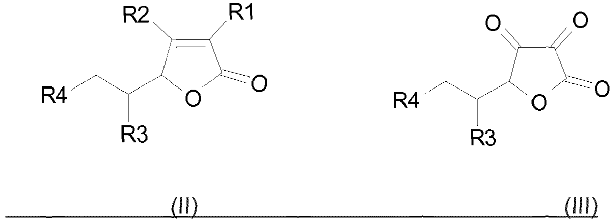 dans laquelle chaque groupe R1, R2, R3 et R4 représente indépendamment l'un de l'autre, un groupe -OH, -O-Alkyl ou -O(C)O-Alkyl ;
un composé de formule (IV) : 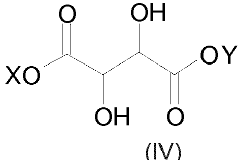 dans laquelle X, Y représentent, indépendamment l'un de l'autre, un cation alcalin ou alcalino-terreux ;
et leurs mélanges.

9. Produit semi-fini (P) selon la revendication précédente, dans lequel le câble multi-torons gommé in situ (C') comprend:
- une couche interne du câble (CCI) comprenant T1 toron(s) interne(s) (TI),
- une couche externe du câble (CCE) comprenant T2 torons externes (TE) enroulés en hélice autour de la couche interne (CCI) du câble,
- la composition de caoutchouc de gommage (20) étant disposée entre la couche interne et la couche externe d'un toron interne (TI) et/ou externe (TE).

10. Produit semi-fini (P) selon la revendication précédente, dans lequel chaque toron interne (TI) et/ou externe (TE) comprend en outre une couche intermédiaire du toron (CT2) comprenant N2 fils intermédiaires enroulés en hélice autour de la couche interne (CT1) du toron, les N3 fils externes de la couche externe (CT3) du toron étant enroulés en hélice autour de la couche intermédiaire (CT2) du toron
dans lequel la composition de caoutchouc de gommage (20) est présente dans chacun des capillaires situés entre le ou les N1 fil(s) interne(s) de la couche interne (CT1) et les N2 fils intermédiaires de la couche intermédiaire (CT2) et/ou
dans lequel la composition de caoutchouc de gommage (20) est présente dans chacun des capillaires situés entre les N2 fils intermédiaires de la couche intermédiaire (CT2) et les N3 fils externes de la couche externe (CT3).

11. Produit semi-fini (P) selon la revendication 9 ou 10, comprenant un câble multi-torons gommé in situ (C') noyé dans une composition de caoutchouc de calandrage (30), le câble comprenant :
- une couche interne du câble (CCI) comprenant T1 toron(s) interne(s) (TI),
- une couche externe du câble (CCE) comprenant T2 torons externes (TE) enroulés en hélice autour de la couche interne (CCI) du câble,
- une composition de caoutchouc de gommage (20) disposée entre la couche interne (CCI) des T1 toron(s) interne(s) (TI) du câble et la couche externe (CCE) des T2 torons externes (TE) du câble,
**caractérisé en ce que**
chaque composition de caoutchouc de gommage (20) et de calandrage (30) comprend au moins un inhibiteur de corrosion,
le taux du ou des inhibiteurs de corrosion de la composition de caoutchouc de calandrage (30) est différent du taux du ou des inhibiteurs de corrosion de la composition de caoutchouc de gommage (20).

12. Produit semi-fini (P) comprenant un câble multi-torons gommé in situ (C') noyé dans une composition de caoutchouc de calandrage (30), le câble comprenant :
- une couche interne du câble (CCI) comprenant T1 toron(s) interne(s) (TI),
- une couche externe du câble (CCE) comprenant T2 torons externes (TE) enroulés en hélice autour de la couche interne (CCI) du câble,
- une composition de caoutchouc de gommage (20) disposée entre la couche interne (CCI) des T1 toron(s) interne(s) (TI) du câble et la couche externe (CCE) des T2 torons externes (TE) du câble,
**caractérisé en ce que**
chaque composition de caoutchouc de gommage (20) et de calandrage (30) comprend au moins un inhibiteur de corrosion,
le taux du ou des inhibiteurs de corrosion de la composition de caoutchouc de calandrage (30) est différent du taux du ou des inhibiteurs de corrosion de la composition de caoutchouc de gommage (20) ;
l'inhibiteur de corrosion de la composition de caoutchouc de calandrage (30) et/ou de la composition de caoutchouc de gommage (20) est choisi parmi :
un composé de formule (I) ou un sel de ce composé : 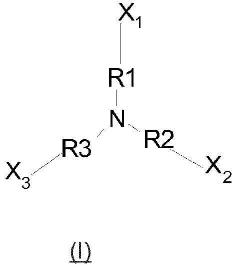 dans laquelle
- chaque groupe R1, R2, R3 représente, indépendamment l'un de l'autre, un groupe alkylène, arylène, arylalkylène, alkylarylène ou cycloalkylène,
- chaque groupe X1, X2 représente, indépendamment l'un de l'autre, -COOH, -CO-NH-OH, -SOOH, -PO(OR)(R') ou -PO(OR)(OR') avec R, R' représentant indépendamment l'un de l'autre un hydrogène ou un groupe alkyl, et
X3 comprend au moins un groupe -COOH, -CO-NH-OH, -SOOH, -PO(OR)(R') ou - PO(OR)(OR') avec R, R' représentant indépendamment l'un de l'autre hydrogène ou un groupe alkyl,
un composé de formule (II) ou (III) ou un sel de ce composé: 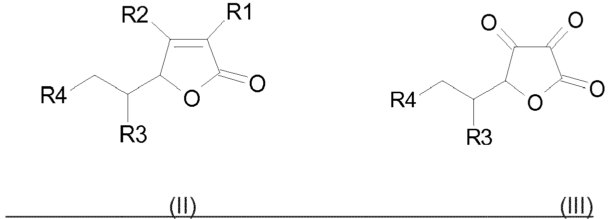 dans laquelle chaque groupe R1, R2, R3 et R4 représente indépendamment l'un de l'autre, un groupe -OH, -O-Alkyl ou -O(C)O-Alkyl ;
un composé de formule (IV) : 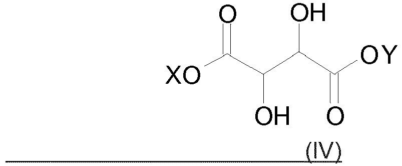 dans laquelle X, Y représentent, indépendamment l'un de l'autre, un cation alcalin ou alcalino-terreux ;
et leurs mélanges.

13. Produit semi-fini (P) cuit obtenu par réticulation d'un produit semi-fini selon l'une quelconque des revendications précédentes, comprenant un gradient de concentration en inhibiteur de corrosion entre la composition de caoutchouc calandrage (30) et la composition de caoutchouc de gommage (20).

14. Pneumatique à l'état cru comprenant un produit semi-fini selon l'une quelconque des revendications 1 à 12.

15. Pneumatique comprenant un produit semi-fini à l'état cuit selon la revendication 13.

## Patentansprüche

1. Halbzeug (P), umfassend ein in situ gummiertes einlitziges Kabel (C), das in eine Kalandrierkautschukzusammensetzung (30) eingebettet ist, wobei das Kabel umfasst:
- eine Innenschicht (CT1) des Kabels, umfassend N1 innere(n) Draht (Drähte),
- eine Außenschicht (CT3) des Kabels, umfassend N3 äußere Drähte, die schraubenförmig um die Innenschicht des Kabels gewickelt sind,
- eine Gummierkautschukzusammensetzung (20), die zwischen der Innenschicht des Kabels und der Außenschicht des Kabels angeordnet ist,
**dadurch gekennzeichnet, dass**
jede Gummierkautschukzusammensetzung (20) und Kalandrierkautschukzusammensetzung (30) mindestens einen Korrosionsinhibitor umfasst,
wobei der Gehalt des Korrosionsinhibitors oder der Korrosionsinhibitoren der Kalandrierkautschukzusammensetzung (30) vom Gehalt des Korrosionsinhibitors oder der Korrosionsinhibitoren der Gummierkautschukzusammensetzung (20) verschieden ist,
wobei der Korrosionsinhibitor der Kalandrierkautschukzusammensetzung (30) und/oder der Gummierkautschukzusammensetzung (20) ausgewählt ist aus:
einer Verbindung der Formel (I) oder einem Salz dieser Verbindung: 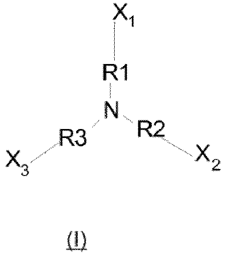 wobei:
- jede Gruppe R1, R2, R3 unabhängig voneinander eine Alkylen-, Arylen-, Arylalkylen-, Alkylarylen- oder Cycloalkylengruppe darstellt,
- jede Gruppe X1, X2 unabhängig voneinander -COOH, -CO-NH-OH, -SOOH, -PO(OR)(R') oder -PO(OR)(OR') darstellt, wobei R, R' unabhängig voneinander einen Wasserstoff oder eine Alkylgruppe darstellen, und
X3 mindestens eine Gruppe -COOH, -CO-NH-OH, -SOOH, -PO(OR)(R') oder -PO(OR)(OR') darstellt, wobei R, R' unabhängig voneinander Wasserstoff oder eine Alkylgruppe darstellen,
einer Verbindung der Formel (II) oder (III) oder einem Salz dieser Verbindung: 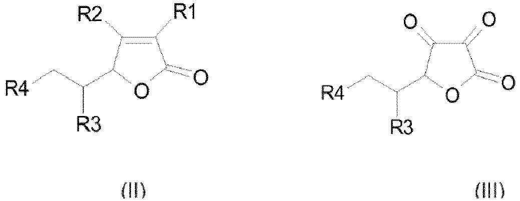 wobei jede Gruppe R1, R2, R3 und R4 unabhängig voneinander eine Gruppe -OH, -O-Alkyl oder -(O)(C)O-Alkyl darstellt;
einer Verbindung der Formel (IV): 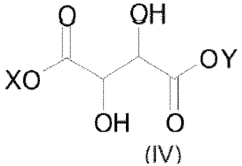 wobei X, Y unabhängig voneinander ein Alkali- oder Erdalkalikation darstellen;
und ihren Mischungen.

2. Halbzeug (P) nach Anspruch 1, wobei der Gehalt des Korrosionsinhibitors oder der Korrosionsinhibitoren der Kalandrierkautschukzusammensetzung (30) streng größer ist als der Gehalt des Korrosionsinhibitors oder der Korrosionsinhibitoren der Gummierkautschukzusammensetzung (20).

3. Halbzeug (P) nach Anspruch 1, wobei der Gehalt des Korrosionsinhibitors oder der Korrosionsinhibitoren der Kalandrierkautschukzusammensetzung (30) streng kleiner ist als der Gehalt des Korrosionsinhibitors oder der Korrosionsinhibitoren der Gummierkautschukzusammensetzung (20).

4. Halbzeug (P) nach einem der vorhergehenden Ansprüche, wobei die Gummierkautschukzusammensetzung (20) in jeder der Kapillaren vorhanden ist, die zwischen dem (den) N1 inneren Draht (Drähten) der Innenschicht (CT1) und den N3 äußeren Drähten der Außenschicht (CT3) angeordnet sind.

5. Halbzeug (P) nach einem der vorhergehenden Ansprüche, wobei das Kabel (C) eine Zwischenschicht (CT2) des Kabels umfasst, umfassend N2 Zwischendrähte, die schraubenförmig um die Innenschicht (CT1) des Kabels gewickelt sind, wobei die N3 äußeren Drähte der Außenschicht (CT3) des Kabels schraubenförmig um die Zwischenschicht (CT2) des Kabels gewickelt sind.

6. Halbzeug (P) nach Anspruch 5, wobei die Gummierkautschukzusammensetzung (20) in jeder der Kapillaren vorhanden ist, die zwischen dem (den) N1 inneren Draht (Drähten) der Innenschicht (CT1) und den N2 Zwischendrähten der Zwischenschicht (CT2) angeordnet sind.

7. Halbzeug (P) nach Anspruch 5 oder 6, wobei die Gummierkautschukzusammensetzung (20) in jeder der Kapillaren vorhanden ist, die zwischen den N2 Zwischendrähten der Zwischenschicht (CT2) und den N3 äußeren Drähten der Außenschicht (CT3) angeordnet sind.

8. Halbzeug (P), umfassend ein in situ gummiertes mehrlitziges Kabel (C'), das in einer Kalandrierkautschukzusammensetzung (30) eingebettet ist,
wobei mindestens eine der Litzen des in situ gummierten mehrlitzigen Kabels umfasst:
- eine Innenschicht (CT1) der Litze, umfassend N1 innere(n) Draht (Drähte),
- eine Außenschicht (CT3) der Litze, umfassend N3 äußere Drähte, die schraubenförmig um die Innenschicht der Litze gewickelt sind,
- eine Gummierkautschukzusammensetzung (20), die zwischen der Innenschicht (CT1) und der Außenschicht (CT3) der Litze angeordnet ist,
**dadurch gekennzeichnet, dass**
jede Gummierkautschukzusammensetzung (20) und Kalandrierkautschukzusammensetzung (30) mindestens einen Korrosionsinhibitor umfasst,
wobei der Gehalt des Korrosionsinhibitors oder der Korrosionsinhibitoren der Kalandrierkautschukzusammensetzung (30) vom Gehalt des Korrosionsinhibitors oder der Korrosionsinhibitoren der Gummierkautschukzusammensetzung (20) verschieden ist,
wobei der Korrosionsinhibitor der Kalandrierkautschukzusammensetzung (30) und/oder der Gummierkautschukzusammensetzung (20) ausgewählt ist aus:
einer Verbindung der Formel (I) oder einem Salz dieser Verbindung: 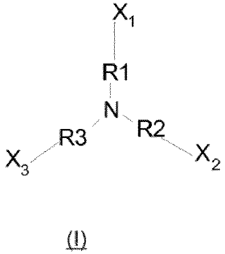 wobei:
- jede Gruppe R1, R2, R3 unabhängig voneinander eine Alkylen-, Arylen-, Arylalkylen-, Alkylarylen- oder Cycloalkylengruppe darstellt,
- jede Gruppe X1, X2 unabhängig voneinander -COOH, -CO-NH-OH, -SOOH, -PO(OR)(R') oder -PO(OR)(OR') darstellt, wobei R, R' unabhängig voneinander einen Wasserstoff oder eine Alkylgruppe darstellen, und
X3 mindestens eine Gruppe -COOH, -CO-NH-OH, -SOOH, -PO(OR) (R') oder -PO(OR) (OR') darstellt, wobei R, R' unabhängig voneinander Wasserstoff oder eine Alkylgruppe darstellen,
einer Verbindung der Formel (II) oder (III) oder einem Salz dieser Verbindung: 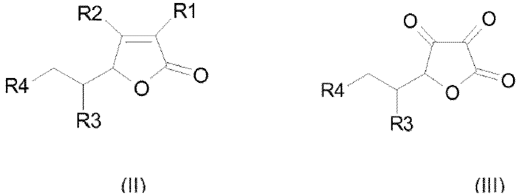 wobei jede Gruppe R1, R2, R3 und R4 unabhängig voneinander eine Gruppe -OH, -O-Alkyl oder -(O)(C)O-Alkyl darstellt;
einer Verbindung der Formel (IV): 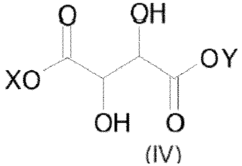 wobei X, Y unabhängig voneinander ein Alkali- oder Erdalkalikation darstellen;
und ihren Mischungen.

9. Halbzeug (P) nach dem vorhergehenden Anspruch,
wobei das in situ gummierte mehrlitzige Kabel (C') umfasst:
- eine Innenschicht (CCI) des Kabels, umfassend T1 innere Litze(n) (TI),
- eine Außenschicht (CCE) des Kabels, umfassend T2 äußere Litzen (TE), die schraubenförmig um die Innenschicht (CCI) des Kabels gewickelt sind,
- wobei die Gummierkautschukzusammensetzung (20) zwischen der Innenschicht und der Außenschicht einer inneren Litze (TI) und/oder äußeren Litze (TE) angeordnet ist.

10. Halbzeug (P) nach dem vorhergehenden Anspruch,
wobei jede innere Litze (TI) und/oder äußere Litze (TE) außerdem eine Zwischenschicht (CT2) der Litze umfasst, umfassend N2 Zwischendrähte, die schraubenförmig um die Innenschicht (CT1) der Litze gewickelt sind, wobei die N3 äußeren Drähte der Außenschicht (CT3) schraubenförmig um die Zwischenschicht (CT2) der Litze gewickelt sind,
wobei die Gummierkautschukzusammensetzung (20) in jeder der Kapillaren vorhanden ist, die zwischen dem (den) N1 inneren Draht (Drähten) der Innenschicht (CT1) und den N2 Zwischendrähten der Zwischenschicht (CT2) angeordnet sind, und/oder
wobei die Gummierkautschukzusammensetzung (20) in jeder der Kapillaren vorhanden ist, die zwischen den N2 Zwischendrähten der Zwischenschicht (CT2) und den N3 äußeren Drähten der Außenschicht (CT3) angeordnet sind.

11. Halbzeug (P) nach Anspruch 9 oder 10, umfassend ein in situ gummiertes mehrlitziges Kabel (C'), das in einer Kalandrierkautschukzusammensetzung (30) eingebettet ist, wobei das Kabel umfasst:
- eine Innenschicht (CCI) des Kabels, umfassend T1 innere Litze(n) (TI),
- eine Außenschicht (CCE) des Kabels, umfassend T2 äußere Litzen (TE), die schraubenförmig um die Innenschicht (CCI) des Kabels gewickelt sind,
- eine Gummierkautschukzusammensetzung (20), die zwischen der Innenschicht (CCI) der T1 inneren Litze(n) (TI) des Kabels und der Außenschicht (CCE) der T2 äußeren Litzen (TE) des Kabels angeordnet ist,
**dadurch gekennzeichnet, dass**
jede Gummierkautschukzusammensetzung (20) und Kalandrierkautschukzusammensetzung (30) mindestens einen Korrosionsinhibitor umfasst,
wobei der Gehalt des Korrosionsinhibitors oder der Korrosionsinhibitoren der Kalandrierkautschukzusammensetzung (30) vom Gehalt des Korrosionsinhibitors oder der Korrosionsinhibitoren der Gummierkautschukzusammensetzung (20) verschieden ist.

12. Halbzeug (P), umfassend ein in situ gummiertes mehrlitziges Kabel (C'), das in einer Kalandrierkautschukzusammensetzung (30) eingebettet ist, wobei das Kabel umfasst:
- eine Innenschicht (CCI) des Kabels, umfassend T1 innere Litze (n) (TI),
- eine Außenschicht (CCE) des Kabels, umfassend T2 äußere Litzen (TE), die schraubenförmig um die Innenschicht (CCI) des Kabels gewickelt sind,
- eine Gummierkautschukzusammensetzung (20), die zwischen der Innenschicht (CCI) der T1 inneren Litze(n) (TI) des Kabels und der Außenschicht (CCE) der T2 äußeren Litzen (TE) des Kabels angeordnet ist,
**dadurch gekennzeichnet, dass**
jede Gummierkautschukzusammensetzung (20) und Kalandrierkautschukzusammensetzung (30) mindestens einen Korrosionsinhibitor umfasst,
wobei der Gehalt des Korrosionsinhibitors oder der Korrosionsinhibitoren der Kalandrierkautschukzusammensetzung (30) vom Gehalt des Korrosionsinhibitors oder der Korrosionsinhibitoren der Gummierkautschukzusammensetzung (20) verschieden ist;
wobei der Korrosionsinhibitor der Kalandrierkautschukzusammensetzung (30) und/oder der Gummierkautschukzusammensetzung (20) ausgewählt ist aus:
einer Verbindung der Formel (I) oder einem Salz dieser Verbindung: 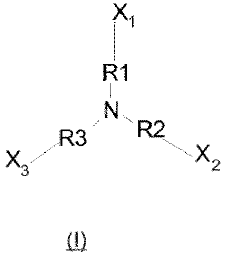 wobei:
- jede Gruppe R1, R2, R3 unabhängig voneinander eine Alkylen-, Arylen-, Arylalkylen-, Alkylarylen- oder Cycloalkylengruppe darstellt,
- jede Gruppe X1, X2 unabhängig voneinander -COOH, -CO-NH-OH, -SOOH, -PO(OR)(R') oder -PO(OR)(OR') darstellt, wobei R, R' unabhängig voneinander einen Wasserstoff oder eine Alkylgruppe darstellen, und
X3 mindestens eine Gruppe -COOH, -CO-NH-OH, -SOOH, -PO(OR)(R') oder -PO(OR)(OR') darstellt, wobei R, R' unabhängig voneinander Wasserstoff oder eine Alkylgruppe darstellen,
einer Verbindung der Formel (II) oder (III) oder einem Salz dieser Verbindung: 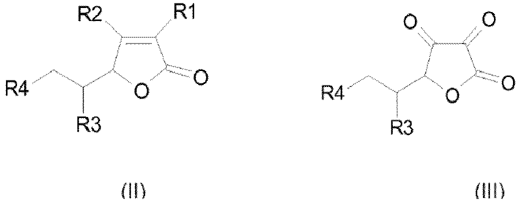 wobei jede Gruppe R1, R2, R3 und R4 unabhängig voneinander eine Gruppe -OH, -O-Alkyl oder -(O)(C)O-Alkyl darstellt;
einer Verbindung der Formel (IV): 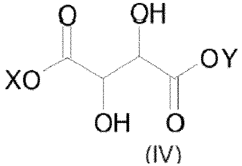 wobei X, Y unabhängig voneinander ein Alkali- oder Erdalkalikation darstellen;
und ihren Mischungen.

13. Gekochtes Halbzeug (P), erhalten durch Vernetzung eines Halbzeugs nach einem der vorhergehenden Ansprüche, umfassend einen Korrosionsinhibitor-Konzentrationsgradienten zwischen der Kalandrierkautschukzusammensetzung (30) und der Gummierkautschukzusammensetzung (20).

14. Luftreifen im Rohzustand, umfassend ein Halbzeug nach einem der Ansprüche 1 bis 12.

15. Luftreifen, umfassend ein Halbzeug im gekochten Zustand nach Anspruch 13.

## Claims

1. Semi-finished product (P) comprising a single-strand cord rubberized in situ (C) embedded in a calendering rubber composition (30), the cord comprising:
- an internal layer of the cord (CT1) comprising N1 internal thread(s),
- an external layer of the cord (CT3) comprising N3 external threads wound helically around the internal layer of the cord,
- a rubberizing rubber composition (20) positioned between the internal layer of the cord and the external layer of the cord,
**characterized in that:**
each rubberizing (20) and calendering (30) rubber composition comprises at least one corrosion inhibitor,
the content of the corrosion inhibitor or inhibitors of the calendering rubber composition (30) is different from the content of the corrosion inhibitor or inhibitors of the rubberizing rubber composition (20),
the corrosion inhibitor of the calendering rubber composition (30) and/or of the rubberizing rubber composition (20) is chosen among:
a compound of formula (I) or a salt of this compound: 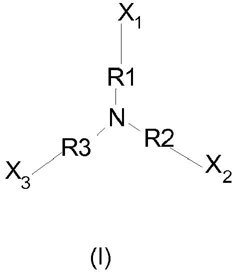 in which:
- each R1, R2 and R3 group represents, independently of one another, an alkylene, arylene, arylalkylene, alkylarylene or cycloalkylene group,
- each X₁ and X₂ group represents, independently of each other, -COOH, -CO-NH-OH, -SOOH, -PO(OR)(R') or -PO(OR)(OR') with R and R' representing, independently of each other, a hydrogen or an alkyl group, and
X₃ comprises at least one -COOH, -CO-NH-OH, -SOOH, -PO(OR)(R') or -PO(OR)(OR') group with R and R' representing, independently of each other, hydrogen or an alkyl group,
a compound of formula (II) or (III) or a salt of this compound: 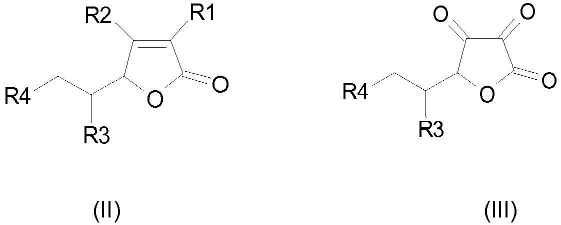 in which each R1, R2, R3 and R4 group represents, independently of one another, an -OH, -O-Alkyl or -O(C)O-Alkyl group;
a compound of formula (IV): 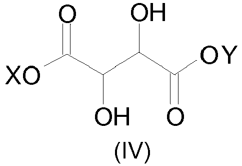 in which X and Y represent, independently of each other, an alkali metal or alkaline earth metal cation;
and the mixture of these compounds.

2. Semi-finished product (P) according to Claim 1, in which the content of the corrosion inhibitor or inhibitors of the calendering rubber composition (30) is strictly greater than the content of the corrosion inhibitor or inhibitors of the rubberizing rubber composition (20).

3. Semi-finished product (P) according to Claim 1, in which the content of the corrosion inhibitor or inhibitors of the calendering rubber composition (30) is strictly less than the content of the corrosion inhibitor or inhibitors of the rubberizing rubber composition (20).

4. Semi-finished product (P) according to any one of the preceding claims, in which the rubberizing rubber composition (20) is present in each of the capillaries located between the N1 internal thread(s) of the internal layer (CT1) and the N3 external threads of the external layer (CT3).

5. Semi-finished product (P) according to any one of the preceding claims, in which the cord (C) comprises an intermediate layer of the cord (CT2) comprising N2 intermediate threads wound helically around the internal layer (CT1) of the cord, the N3 external threads of the external layer (CT3) of the cord being wound helically around the intermediate layer (CT2) of the cord.

6. Semi-finished product (P) according to Claim 5, in which the rubberizing rubber composition (20) is present in each of the capillaries located between the N1 internal thread(s) of the internal layer (CT1) and the N2 intermediate threads of the intermediate layer (CT2).

7. Semi-finished product (P) according to Claim 5 6 9, in which the rubberizing rubber composition (20) is present in each of the capillaries located between the N2 intermediate threads of the intermediate layer (CT2) and the N3 external threads of the external layer (CT3).

8. Semi-finished product (P) comprising a multistrand rope rubberized in situ (C') embedded in a calendering rubber composition (30),
at least one of the strands of the multistrand rope rubberized in situ comprising:
- an internal layer of the strand (CT1) comprising N1 internal thread(s),
- an external layer of the strand (CT3) comprising N3 external threads wound helically around the internal layer of the strand,
- a rubberizing rubber composition (20) positioned between the internal layer (CT1) and the external layer (CT3) of the strand,
**characterized in that:**
each rubberizing (20) and calendering (30) rubber composition comprises at least one corrosion inhibitor,
the content of the corrosion inhibitor or inhibitors of the calendering rubber composition (30) is different from the content of the corrosion inhibitor or inhibitors of the rubberizing rubber composition (20),
the corrosion inhibitor of the calendering rubber composition (30) and/or of the rubberizing rubber composition (20) is chosen among:
a compound of formula (I) or a salt of this compound: 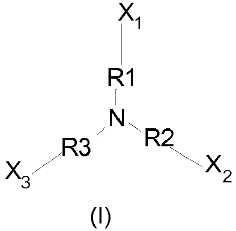 in which:
- each R1, R2 and R3 group represents, independently of one another, an alkylene, arylene, arylalkylene, alkylarylene or cycloalkylene group,
- each X₁ and X₂ group represents, independently of each other, -COOH, -CO-NH-OH, -SOOH, -PO(OR)(R') or -PO(OR)(OR') with R and R' representing, independently of each other, a hydrogen or an alkyl group, and
X₃ comprises at least one -COOH, -CO-NH-OH, -SOOH, -PO(OR)(R') or -PO(OR)(OR') group with R and R' representing, independently of each other, hydrogen or an alkyl group,
a compound of formula (II) or (III) or a salt of this compound: 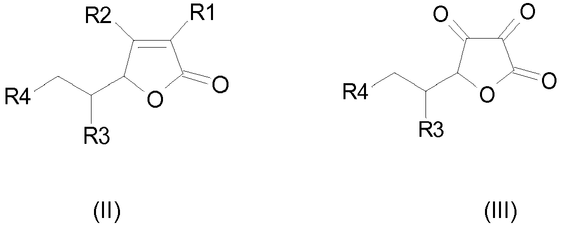 in which each R1, R2, R3 and R4 group represents, independently of one another, an -OH, -O-Alkyl or -O(C)O-Alkyl group;
a compound of formula (IV): 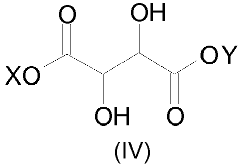 in which X and Y represent, independently of each other, an alkali metal or alkaline earth metal cation;
and the mixture of these compounds.

9. Semi-finished product (P) according to the preceding claim, in which the multistrand rope rubberized in situ (C') comprises:
- an internal layer of the rope (CCI) comprising T1 internal strand(s) (TI),
- an external layer of the rope (CCE) comprising T2 external strands (TE) wound helically around the internal layer (CCI) of the rope,
- the rubberizing rubber composition (20) being positioned between the internal layer and the external layer of an internal (TI) and/or external (TE) strand.

10. Semi-finished product (P) according to the preceeding claim, in which each internal (TI) and/or external (TE) strand additionally comprises an intermediate layer of the strand (CT2) comprising N2 intermediate threads wound helically around the internal layer (CT1) of the strand, the N3 external threads of the external layer (CT3) of the strand being wound helically around the intermediate layer (CT2) of the strand, in which the rubberizing rubber composition (20) is present in each of the capillaries located between the N1 internal thread(s) of the internal layer (CT1) and the N2 intermediate threads of the intermediate layer (CT2) and/or
in which the rubberizing rubber composition (20) is present in each of the capillaries located between the N2 intermediate threads of the intermediate layer (CT2) and the N3 external threads of the external layer (CT3).

11. Semi-finished product (P) according to claim 9 or 10, comprising a multistrand rope rubberized in situ (C') embedded in a calendering rubber composition (30), the rope comprising:
- an internal layer of the rope (CCI) comprising T1 internal strand(s) (TI),
- an external layer of the rope (CCE) comprising T2 external strands (TE) wound helically around the internal layer (CCI) of the rope,
- a rubberizing rubber composition (20) positioned between the internal layer (CCI) of the T1 internal strand(s) (TI) of the rope and the external layer (CCE) of the T2 external strands (TE) of the cord,
**characterized in that:**
each rubberizing (20) and calendering (30) rubber composition comprises at least one corrosion inhibitor,
the content of the corrosion inhibitor or inhibitors of the calendering rubber composition (30) is different from the content of the corrosion inhibitor or inhibitors of the rubberizing rubber composition (20).

12. Semi-finished product (P) comprising a multistrand rope rubberized in situ (C') embedded in a calendering rubber composition (30), the rope comprising:
- an internal layer of the rope (CCI) comprising T1 internal strand(s) (TI),
- an external layer of the rope (CCE) comprising T2 external strands (TE) wound helically around the internal layer (CCI) of the rope,
- a rubberizing rubber composition (20) positioned between the internal layer (CCI) of the T1 internal strand(s) (TI) of the rope and the external layer (CCE) of the T2 external strands (TE) of the rope,
**characterized in that:**
each rubberizing (20) and calendering (30) rubber composition comprises at least one corrosion inhibitor,
the content of the corrosion inhibitor or inhibitors of the calendering rubber composition (30) is different from the content of the corrosion inhibitor or inhibitors of the rubberizing rubber composition (20),
the corrosion inhibitor of the calendering rubber composition (30) and/or of the rubberizing rubber composition (20) is chosen among:
a compound of formula (I) or a salt of this compound: 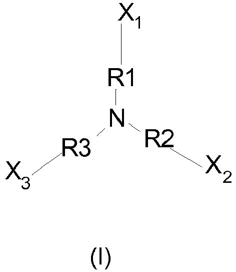 in which:
- each R1, R2 and R3 group represents, independently of one another, an alkylene, arylene, arylalkylene, alkylarylene or cycloalkylene group,
- each X₁ and X₂ group represents, independently of each other, -COOH, -CO-NH-OH, -SOOH, -PO(OR)(R') or -PO(OR)(OR') with R and R' representing, independently of each other, a hydrogen or an alkyl group, and
X₃ comprises at least one -COOH, -CO-NH-OH, -SOOH, -PO(OR)(R') or -PO(OR)(OR') group with R and R' representing, independently of each other, hydrogen or an alkyl group,
a compound of formula (II) or (III) or a salt of this compound: 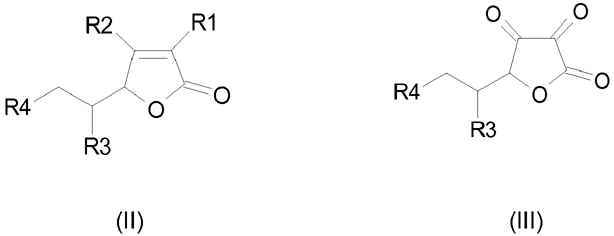 in which each R1, R2, R3 and R4 group represents, independently of one another, an -OH, -O-Alkyl or -O(C)O-Alkyl group;
a compound of formula (IV): 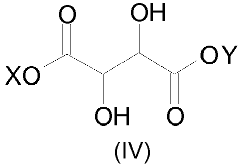 in which X and Y represent, independently of each other, an alkali metal or alkaline earth metal cation;
and the mixture of these compounds.

13. Cured semi-finished product (P) obtained by crosslinking a semi-finished product according to any one of the preceding claims, comprising a concentration gradient of corrosion inhibitor between the calendering rubber composition (30) and the rubberizing rubber composition (20).

14. Tyre in the raw state comprising a semi-finished product according to any one of Claims 1 to 12.

15. Tyre comprising a semi-finished product in the cured state according to Claim 13.
